(19) Europäisches Patentamt
European Patent Office
Office européen des brevets

(11) Publication number : **0 421 632 B1**

(12) # EUROPEAN PATENT SPECIFICATION

(45) Date of publication of patent specification : **01.12.93 Bulletin 93/48**

(51) Int. Cl.$^5$ : **G01T 1/29**

(21) Application number : **90310226.7**

(22) Date of filing : **19.09.90**

(54) **Digital X-ray image processing apparatus and method.**

(30) Priority : **20.09.89 JP 243635/89**
**20.09.89 JP 243636/89**
**20.09.89 JP 243637/89**
**20.11.89 JP 299753/89**

(43) Date of publication of application : **10.04.91 Bulletin 91/15**

(45) Publication of the grant of the patent : **01.12.93 Bulletin 93/48**

(84) Designated Contracting States : **DE FR GB**

(56) References cited :
**EP-A- 0 175 285**
**US-A- 3 859 527**

(73) Proprietor : **FUJITSU LIMITED**
**1015, Kamikodanaka Nakahara-ku**
**Kawasaki-shi Kanagawa 211 (JP)**

(72) Inventor : **Namiki, Fumihiro**
**5-9-205, Yamazakidanchi, 2130 Yamazaki-cho**
**Machida-shi, Tokyo 194-01 (JP)**
Inventor : **Takeda, Shiro**
**1807-36, Kobuchi**
**Sagamihara-shi, Kanagawa 229 (JP)**
Inventor : **Shimura, Takaki**
**29-44, Tsurukawa 4-chome**
**Machida-shi, Tokyo 194-01 (JP)**
Inventor : **Yamada, Isamu**
**Shingetsu-so 101,436, Shibokuchi, Tatatsu-ku**
**Kawasaki-shi, Kanagawa 213 (JP)**

(74) Representative : **Billington, Lawrence Emlyn et al**
**Haseltine Lake & Co Hazlitt House 28,**
**Southampton Buildings Chancery Lane**
**London WC2A 1AT (GB)**

EP 0 421 632 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a radiograph read apparatus; more particularly, it relates to a digital X-ray image processing apparatus mainly used in the field of medical equipment.

X-ray apparatus is widely used in various fields, particularly in the medical field. For high sensitivity and high resolution a digital X-ray image processing apparatus is generally used in which an X-ray image is displayed on a cathode-ray tube (CRT) instead of a conventional radiograph.

The above conventional digital X-ray image processing apparatus (see, for example, US-A-3,859,527 or EP-A-0,175,285) uses a photostimulable phosphor plate constituted by a sheet-like fluorescence medium which is able to accumulate a part of the X-ray energy. This fluorescence medium accumulating the X-ray energy is called an "accumulative fluorescence body". The accumulative fluorescence body can store the X-ray energy for a relatively long time.

In general, the digital X-ray image can be obtained by the following steps. When the object, for example a human body, is irradiated with X-rays, the X-rays transmitted through the object expose the photostimulable phosphor plate. The photostimulable phosphor plate is then scanned by an excitation beam (for example a laser beam), whereupon the energy accumulated in the fluorescence body is emitted from the photostimulable phosphor plate in the form of fluorescent light corresponding to the accumulated energy.

The fluorescent light is collected by collection equipment, for example bundled optical fibers, and converted to analog electrical signals by an optical-to-electrical converter. Further, the analog electrical signals are converted to digital signals to obtain a digital X-ray image on a monitor display apparatus.

In this case, to determine conditions in an actual reading of the X-ray image from the photostimulable phosphor plate, it is important to read an outline of the X-ray image (i.e., the state of the X-ray energy) accumulated in the fluorescence body prior to the actual read. Such a step is referred to as a "pre-scan".

The "actual read" means, in this case, that a doctor reads the X-ray image displayed on the monitor for diagnosing the object. For the photographic conditions during the actual read, it is necessary to determine the supply voltage for the X-ray tube, the multiplication rate of the photomultiplier, the amplification factor of the amplifier, and the distance between the X-ray tube and the object. In general, this photographic condition information is determined from pre-scan data.

There are various methods for pre-scanning in the conventional art.

In one method, prior to the actual read, the photostimulable phosphor plate is scanned by an excitation beam which is weaker than the excitation beam for the actual read. The quantity of the fluorescent light emitted by the weak excitation beam is measured by suitable measuring equipment to perform the pre-scan.

In another method, upon X-ray exposure of the photostimulable phosphor plate, a momentary fluorescent light is generated from the photostimulable phosphor plate. In this method, the momentary fluorescent light is measured by suitable measuring equipment to perform the pre-scan. This method utilizes the characteristic that the intensity of the momentary fluorescent light is proportional to that of the fluorescent light in the actual read.

However, in these methods, much information which is not necessary for the diagnosis, such as a very strong X-ray intensity range and a very weak X-ray intensity range, is contained in the pre-scan data. For example, in the diagnosis of the breast of a human body, although the intensity range of the X-rays for the diagnosis of the lungs is different from that of the X-rays for the diagnosis of ribs, all these various intensities of the X-rays are mixed in the pre-scan data.

EP-0175285, mentioned above, discloses an image read-out apparatus with an input device the input to which determines the read-out conditions, according to the tissue of interest and the image-processing method used. This arrangement affords some versatility in adjusting read-out parameters.

It is desirable to provide a digital X-ray image-processing apparatus and method enabling determination of the optimum intensity range of the X-ray in accordance with the object of the diagnosis to increase the precision of the diagnosis.

In an aspect of the present invention there is provided a digital X-ray image processing apparatus for exposing an X-ray transmitted through an object to a photostimulable phosphor plate, for scanning the photostimulable phosphor plate by means of an excitation beam to obtain an X-ray image, and for reading the X-ray image, the digital X-ray image processing apparatus including: an image storage unit for storing the X-ray image used for an actual read when diagnosing the object; a histogram storage unit for storing a standard histogram of the X-ray image, the standard histogram being constituted by an intensity of the X-ray and a frequency thereof; a first monitor unit for displaying the standard histogram read out from the histogram storage unit; and a read conditions determination unit for determining actual read conditions of the X-ray image based on a latitude of the intensity of the X-ray in the standard histogram.

In the preferred embodiment, a digital X-ray image processing apparatus further includes: a switching unit for switching between a pre-scan operation and the actual read operation; and a histogram calculation unit for calculating a pre-scan histogram based on pre-scan data obtained prior to the actual read in the pre-scan operation, the pre-scan histogram being input to the first monitor means and used instead of the standard histogram.

In one preferred embodiment, a digital X-ray image processing apparatus further includes a second monitor unit for displaying the pre-scan histogram, and the actual read conditions being determined based on the latitude of the intensity of the X-ray in the pre-scan histogram.

In one preferred embodiment, a digital X-ray image processing apparatus further includes: a correlation analysis unit for receiving the pre-scan and standard histograms, and calculating a correlation value to move the standard histogram in the direction of the intensity of the X-ray so as to obtain a maximum correlation value between these histograms; and a histogram correlation unit for calculating a difference between the standard histogram and the pre-scan histogram, and correcting the latitude of the intensity of the X-ray used for the actual read.

In one preferred embodiment, a digital X-ray image processing apparatus, further includes: a gradation look up table for determining conditions of the gradation processing of the standard histogram in accordance with the diagnosis area of the object; and an emphasis coefficient unit for a spacial filter.

## BRIEF DESCRIPTION OF THE DRAWINGS

In the drawings:

Fig. 1 is a basic structural view of a digital X-ray image processing apparatus;

Fig. 2 is a schematic block diagram of a digital X-ray image processing apparatus according to a first embodiment of the present invention;

Fig. 3 is a detailed block diagram of the digital X-ray image processing apparatus shown in Fig. 2;

Fig. 4 is a schematic block diagram of a digital X-ray image processing apparatus according to a second embodiment of the present invention;

Fig. 5 is a detailed block diagram of the digital X-ray image processing apparatus shown in Fig. 4;

Fig. 6 is a schematic block diagram of a digital X-ray image processing apparatus according to a third embodiment of the present invention;

Fig. 7 is a detailed block diagram of the digital X-ray image processing apparatus shown in Fig. 6;

Fig. 8 is a schematic block diagram of a digital X-ray image processing apparatus according to a fourth embodiment of the present invention;

Fig. 9 is a detailed block diagram of the digital X-ray image processing apparatus shown in Fig. 8;

Fig. 10 is a view for explaining the process of the fourth embodiment shown in Fig. 9;

Fig. 11 is a view for explaining the maximum correlation value calculated in the correlation analysis unit shown in Fig. 9;

Fig. 12 is a schematic block diagram of a digital X-ray image processing apparatus according to a fifth embodiment of the present invention;

Fig. 13 is a detailed block diagram of the digital X-ray image processing apparatus shown in Fig. 12;

Fig. 14 is a view for explaining the process of the fifth embodiment shown in Fig. 12;

Fig. 15 is a detailed block diagram of the digital X-ray image processing apparatus according to a sixth embodiment of the present invention;

Fig. 16 is a view for explaining conditions of the gradation processing, and

Fig. 17 is a view for explaining an emphasis coefficient shown in Fig. 15.

Figure 1 is a basic structural view of a digital X-ray image-processing apparatus. In Fig. 1, reference number 3.1 denotes a photostimulable phosphor plate or sheet, 3.4 an excitation beam source, 3.5 a galvanometer mirror, 3.6 an f-Θ lens, 3.7 a movable base, 3.8 bundled optical fibers, 3.9 a photomultiplier (PMT), 3.10 an amplifier (AMP), 3.11 an A/D converter (A/D), and 3.12 an image memory.

When X-rays are irradiated on to the object 3.0 (see Fig. 2), the X-rays transmitted through the object 3.0 expose the photostimulable phosphor plate 3.1. When the photostimulable phosphor plate 3.1 is scanned by the excitation beam (for example, laser beam) emitted from the beam source 3.4 through the f-Θ lens 3.6, the energy accumulated on the fluorescence body is excited by the laser beam and fluorescent light corresponding to the accumulated energy is emitted from the photostimulable phosphor plate 3.1.

The movable base 3.7 is used for moving the photostimulable phosphor plate 3.1 in the sub-scanning direction. The fluorescent light is collected by collection equipment, for example bundled optical fibers 3.8, and converted to an analog electrical signal by the photomultiplier 3.9. Further, the analog electrical signal is multiplied by the amplifier 3.10 and converted to digital signals by the A/D converter 3.11 to obtain a digital X-ray image on the CRT or the printer. The digital X-ray image is stored in the image memory 3.12.

Figure 2 is a schematic block diagram of a digital X-ray image-processing apparatus according to a first embodiment of the present invention.

In Fig. 2, reference number 1.1 denotes a control console for controlling the supply voltage and current for the X-ray tube, which transmits data such as the irradiation time of the X-rays and the distance between the object and the X-ray tube to a control unit 2. 1.2 denotes the X-ray tube, 1.3 an ultrasonic distance meter, and 1.6 a first monitor for displaying a histogram of the X-ray image.

Further, 2.1 is a standard histogram storage unit for storing various standard histograms, and 2.3 is a determination unit for determining read conditions, for example the multiplication rate of the photomultiplier and the amplification factor of the amplifier, during the actual read when diagnosing the object.

Still further, Fig. 2 shows the read unit 3,the object 3.0, and the photostimulable phosphor plate 3.1, while the reference numeral 3.3 denotes an actual read unit.

The above data are transmitted to the control unit 2 as the photographic conditions. Further, the distance data are also transmitted to the control unit 2. The control unit 2 selects one of the standard histograms in accordance with the above photographic conditions. This selected standard histogram is displayed on the monitor 1.6. The standard histogram is made by estimating a histogram of the X-ray intensity accumulated on the photostimulable phosphor plate 3.1.

In this embodiment, the selected standard histogram indicating the relationship between the intensity of the X-ray (abscissa) and the frequency thereof (ordinate) is displayed on the first monitor 1.6 based on the above photographic conditions. A predetermined latitude or range of X-ray intensity is selected on the abscissa of the histogram as the latitude during the actual read. As shown on the monitor 1.6, in the X-ray image of the breast the frequency of the lungs portion is large, and that of the skin portion is small.

As shown in Fig. 2, the relationship between X-ray intensity and frequency is different for bone (rib), lungs, and skin. Accordingly, when a doctor wishes to diagnose the lungs, the actual read is performed with the range (latitude) of X-ray intensity denoted by L in the diagram.

Figure 3 is a detailed block diagram of the digital X-ray image-processing apparatus shown in Fig. 2. In Fig. 3, reference number 4.1 denotes a PMT supply voltage table for storing conditions of the supply voltage in accordance with the predetermined latitude L, and 4.2 denotes an AMP offset gain table for storing the offset voltage and gain in accordance with the latitude L. 2.3 is a determination unit for determining the actual read conditions based on the latitude L to be fed in by the doctor using the latitude pointing unit 2.6. In the monitor image 1.6, the latitude L is defined between the minimum X-ray intensity Smin and the maximum intensity Smax. The minimum intensity Smin and the maximum intensity Smax are input to the PMT supply voltage table 4.1 and the AMP offset gain table 4.2 to obtain optimal voltage and gain of the PMT and AMP.

Figure 4 is a schematic block diagram of a digital X-ray image-processing apparatus according to a second embodiment of the present invention.

In Fig. 4, the same reference numbers as shown in Fig. 2 are attached to the same components. Further, reference number 3.2 denotes a pre-scan unit for generating pre-scan data and obtaining a pre-scan histogram from the pre-scan data. In this embodiment, the pre-scan unit 3.2 is added to the read unit 3. The X-rays are irradiated on to the object 3.0 and the X-ray image is accumulated on the photostimulable phosphor plate 3.1. Accordingly, when the pre-scan data are obtained from the accumulated image as previously explained, the pre-scan histogram is calculated in the pre-scan unit 3.2. The pre-scan histogram is displayed on the monitor 1.6. The latitude L is determined on the pre-scan histogram. Further, based on the latitude L pointed out by the doctor, the photographic conditions are determined from the pre-scan histogram in the determination unit 2.3 as the actual read conditions.

Figure 5 is a detailed block diagram of the digital X-ray image processing apparatus shown in Fig. 4. In Fig. 5, reference number 5.1 denotes a pre-scan histogram calculation unit for obtaining the pre-scan histogram from the pre-scan data. The pre-scan histogram calculation unit 5.1 is included in the pre-scan unit 3.2 shown in Fig. 4.

Further, SW denotes a switching unit for switching between the pre-scan operation and the actual scan operation. In the position "a", the pre-scan histogram is obtained, and in the position "b", the actual read is performed. The pre-scan operation is performed before the actual read operation. The pre-scan histogram is displayed on the monitor 1.6.

Figure 6 is a schematic block diagram of a digital X-ray image processing apparatus according to a third embodiment of the present invention. Reference number 1.7 denotes a second monitor for displaying the pre-scan histogram transmitted from the pre-scan unit 3.2. In this embodiment, the first and the second monitors are provided on the control console 1.1. Accordingly, it is possible to simultaneously display the standard and the pre-scan histograms on the control console 1.1. Accordingly, the latitude L of the intensity of the X-ray in the pre-scan histogram can be easily defined with reference to the standard histogram. In this embodiment, if noise components are contained in the pre-scan histogram so that it is not possible to determine the latitude in the second monitor 1.7, it is possible to easily point out the latitude on the first monitor 1.6.

Figure 7 is a detailed block diagram of the digital X-ray image processing apparatus shown in Fig. 6. The switching unit SW is switched to the pre-scan operation so that the pre-scan histogram of the histogram calculation unit 5.1 is output to the second monitor 1.7. The latitude L is pointed out on the pre-scan histogram in the second monitor 1.7.

Figure 8 is a schematic block diagram of a digital X-ray image processing apparatus according to a fourth embodiment of the present invention. In Fig. 8, reference number 2.2 denotes a correlation analysis unit, and 2.4 denotes a histogram correction unit. The correlation analysis unit 2.2 receives the pre-scan and standard histograms, and calculates the correlation value between the standard histogram and the pre-scan histogram to move the standard histogram in the direction of the intensity of the X-ray. Accordingly, it is possible to obtain a maximum correlation value between these histograms. The histogram correlation unit 2.4 calculates the difference between the standard histogram and the pre-scan histogram, and corrects the latitude of the intensity of the X-ray used for the actual read.

Figure 9 is a detailed block diagram of the digital X-ray image processing apparatus shown in Fig. 8. The pre-scan histogram H2 is input to the correlation analysis unit 2.2. Further, the standard histogram H1 is also input to the correlation analysis unit 2.2. The correlation analysis unit 2.2 outputs a new latitude L' to determine the photographic conditions to the AMP offset table 4.2.and the PMT supply voltage table 4.1 after calculation of the maximum correlation. The correlation value obtained by the correlation analysis unit 2.2 is input to the histogram correction unit 2.4. The histogram Hx corrected by the histogram correction unit 2.4. is stored in the histogram storage unit 2.1. The standard histogram stored in the histogram storage unit 2.1 is displayed on the monitor 1.6. The operation of this embodiment is explained in detail below.

Figure 10 is view for explaining the process of the fourth embodiment. First, the doctor inputs the photographic conditions, for example, the supply voltage, the object data, the purpose of the diagnosis, etc., from the control console 1.1.

In step 1, the histogram having the same photographic conditions as the above is selected from the contents of the standard histogram storage unit 2.1.

In step 2, the selected histogram is displayed on the monitor 1.6 as the standard histogram H1, and the latitude L is pointed out by the doctor.

In step 3, the pre-scan histogram H2 is calculated in the pre-scan histogram calculation unit 5.1, and input to the correlation analysis unit 4.2.

In step 4, the correlation value between the standard histogram H1 and the pre-scan histogram H2 is calculated in the correlation analysis unit 2.2. As shown by arrows, the standard histogram H1 is moved in the direction of the intensity of the X-ray so as to obtain the maximum correlation value.

In step 5, after calculation of the correlation, new standard latitude L' is determined and displayed on the monitor. This new latitude L' is used for determining the actual read conditions when diagnosing the object.

In step 6, the difference between the standard histogram H1 and the pre-scan histogram H2 is calculated and the configuration of the standard histogram is corrected by the histogram correction unit 2.4.

In step 7, the histogram Hx corrected by the correction unit 2.4 is stored in the standard histogram storage unit 2.1 as the standard histogram.

Figure 11 is a view for explaining the maximum correlation value calculated in the correlation analysis unit 2.2 in the fourth embodiment. In Fig. 11, $P_{0(x)}$ denotes a probability density function of the standard histogram H1, and $P_{1(x)}$ denotes the probability density function of the pre-scan histogram H2. Further, $m_{01}$ and $m_{11}$ denote a first moment, and $m_{02}$ and $m_{12}$ denote a second moment. The subscript "0" denotes the standard histogram and the subscript "1" denotes the pre-scan histogram. In this case, the "first moment" denotes the center position of the histogram and the "second moment" denotes the latitude.

In Fig. 11, the monitor image A shows the probability density function of the standard histogram H1, and the monitor image B shows the probability density function of the standard histogram H2. As shown in images B and C, the width of the histogram H2 is broadened in accordance with the ratio of the second moment $m_{12}/m_{02}$.

The maximum correlation value $\tau_0$ is defined by the following formula.

$$\tau_0 = \int_{-\infty}^{\infty} \{P_0(x + \tau)\cdot P_1(x)\}dx \quad (1)$$

Accordingly, as shown in image D, the maximum correlation value $\tau_0$ is defined by the difference between the first moments ($m_{01}$ - $m_{11}$).

As shown in Fig. E, the latitude L is corrected in accordance with the maximum correlation value $\tau_0$ so that a new latitude L' is pointed out on the histogram H2. That is, the center of the latitude L is shifted by the maximum correlation value $\tau_0$, the shifted new center is defined as the center of the latitude L'. The latitude L' is defined by the following formula,

$$L' = (m_{12}/m_{02}) \times L \quad (2)$$

Figure 12 is a schematic block diagram of a digital X-ray image processing apparatus according to a fifth embodiment of the present invention. In this embodiment, the second histogram correction unit 2.5 is used for correcting the standard histogram stored in the histogram storage unit 2.1 based on the actual read histogram. The corrected standard histogram is again stored in the histogram storage unit 2.1. In this case, the actual read is performed for the latitude L on the first standard histogram under the predetermined read conditions, then, the standard histogram is corrected based on the actual read histogram so as to comply with the desired latitude to be diagnosed.

Figure 13 is a detailed block diagram of the digital X-ray image processing apparatus shown in Fig. 12. The histogram H2 calculated by the histogram calculation unit 5.1 is output to the histogram correction unit 2.5. Further, the standard histogram H1 and the latitude L are input to the histogram correction unit 2.5. The corrected histogram Hx (new standard histogram) and new latitude L' from the histogram correction unit 2.5 are stored in the histogram storage unit 2.1. The operation of the fifth embodiment is explained in detail below.

Figure 14 is a view for explaining the process of the fifth embodiment. First, the doctor inputs the photographic conditions, for example, the object data, the purpose of the diagnosis, etc., from the control console 1.1.

In step 1, the histogram having the same photographic conditions as the above is selected from the contents of the standard histogram storage unit 2.1. instead of the standard histogram H1.

In step 2, the selected histogram is displayed on the monitor 1.6 as the standard histogram H1. Further, the latitude L is pointed out by the doctor. The latitude L is pointed out in the range between the minimum intensity Smin and the maximum intensity Smax.

In step 3, the actual read histogram is obtained by another means for the actual read, and this actual read histogram is output to the histogram correction unit 2.5 to correct the standard histogram previously stored.

In step 4, the corrected actual read histogram is stored in the histogram storage unit 2.1 instead of the standard histogram.

Figure 15 is a detailed block diagram of the digital X-ray image processing apparatus according to a sixth embodiment of the present invention. In Fig. 15, reference number 6.1 denotes a gradation look-up table, and 6.2 denotes an emphasis coefficient means of a spacial filter for spacial frequency. The data of the gradation look up table 6.1 is input to the monitor 1.6. Further, the emphasis coefficient of the spacial frequency is also input to the monitor 1.6. In the monitor 1.6, the curve 6.1 denotes a gradation processing curve, and the curve 6.2 denotes an emphasis coefficient curve. The gradation and the emphasis coefficient are explained in detail below. In this embodiment, the gradation curve and the emphasis coefficient curve are displayed on the same histogram. In this case, the histogram pattern is not revised under the above curves, and the conditions of the image processing is revised based on the above curves.

Figure 16 is a view for explaining the conditions of the gradation processing. In Fig. 16, the abscissa denotes the intensity of the X-ray. In the ordinate the left side denotes the frequency, and the right side denotes the gradation rate.

In this embodiment, the curves each indicating the conditions of the gradation processing are displayed on the monitor with the standard histogram.

Reference number 1 is a curve indicating the standard histogram. Reference number 2 is a curve indicating the conditions of the gradation processing when the doctor wishes to diagnose the soft portion of the object. Further, reference number 3 is a curve indicating the conditions of the gradation processing when the doctor wish to diagnose the whole object, i.e., the bone portion, the soft portion and the skin portion. Reference number 4 is a curve indicating the conditions of the gradation processing when the doctor wishes to diagnose the bone portion. However the standard histogram 1 is not revised in accordance with the gradation processing operation and the conditions of the image processing are changed in accordance with the gradation curve.

Figure 17 is a view for explaining the emphasis coefficient of the special frequency. In Fig. 17, the abscissa denotes the intensity of the X-ray. In the ordinate, the left side denotes the frequency, and the right side denotes the emphasis coefficient of the kernel size of the spacial filter.

In this embodiment, the curves 1 to 3 are displayed on the monitor with the standard histogram. Reference number 1 is the curve indicating the standard histogram, and reference numbers 2 and 3 are the curve indicating the emphasis coefficient. However, the standard histogram is not revised in accordance with the spacial frequency and the emphasis coefficient of the kernel size of the spacial filter.

As will have been apparent, the invention broadly concerns a method and apparatus for determining conditions for reading an image exposed on a phosphor plate by X-rays passing through an object, comprising the steps of: storing a standard histogram of the X-ray image, the histogram incorporating data relating the X-ray intensity to frequency; displaying the standard histogram; and determining actual read conditions for the X-ray image based on a latitude of the intensity of the X-ray in the standard histogram.

## Claims

**1.** A digital X-ray image-processing apparatus for use in scanning a photostimulable phosphor plate (3.1), exposed to X-rays transmitted through an object (3.0), by means of an excitation beam to obtain an X-ray image, and in reading the X-ray image by means of a read unit (3) for performing a read-out of the exposed phosphor plate (3.1), the digital X-ray image-processing apparatus including image-storage means (3.12) for storing the image produced by an actual read when diagnosing the object and characterised by further including:

means for storing a histogram relating to the X-ray image, representing the relation between the X-ray intensity and the corresponding frequency for predetermined image-recording conditions;

monitor means (1.6) for displaying the histogram;

input means (2.6) by which a suitable range of X-ray intensities of the histogram may be chosen, depending on the object to be examined; and

means (2.3) for setting the actual read conditions of the X-ray image based on the chosen range of intensity of the X-rays in the histogram.

2. A digital X-ray image-processing apparatus according to claim 1,

in which the said histogram storage means (2.1) is adapted to store various standard histograms relating to the X-ray image, each standard histogram representing the relation between the X-ray intensity and the corresponding frequency for various image-recording conditions;

and which further includes a control unit (2) for selecting one of the standard histograms in accordance with the image-recording conditions for storage and display as aforesaid.

3. A digital X-ray image-processing apparatus as claimed in claim 1 or 2, further comprising: a switching unit (SW) for switching between a pre-scan operation and the actual read operation; and a histogram calculation unit (5.1) operable when the switch is set to pre-scan operation to calculate a pre-scan histogram, based on data obtained in the pre-scan operation prior to the actual read, for use in selecting the said intensity range.

4. A digital X-ray image-processing apparatus as claimed in claim 3, and including means for inputting the pre-scan histogram to the said monitor means (1.6) to be displayed as aforesaid.

5. A digital X-ray image-processing apparatus as claimed in claim 3 when dependent on claim 2, further comprising second monitor means (1.7) for displaying the pre-scan histogram, the means (2.3) for setting the actual read conditions being operable to set the range of X-ray intensity on the basis of the pre-scan histogram and the standard histogram.

6. A digital X-ray image-processing apparatus as claimed in claim 3 when dependent on claim 2, further comprising: a correlation analysis unit (2.2) operatively connected to the histogram storage means (2.1) and the calculation unit (5.1) for receiving the pre-scan and the standard histograms, and for calculating a correlation value to shift the standard histogram in the X-ray intensity direction so as to obtain a maximum correlation value between these histograms; and a histogram correlation unit (2.4) connected to the correlation analysis unit (2.2) for calculating the difference between the shifted standard histogram and the pre-scan histogram, and using the calculated difference to correct the intensity range of the X-rays used for the actual read.

7. A digital X-ray image-processing apparatus as claimed in claim 2, further comprising a histogram correction unit (2.5) for correcting the standard histogram based on the actual read histogram and storing the corrected standard histogram in the histogram storage unit (2.1).

8. A digital X-ray image-processing apparatus as claimed in claim 2, further comprising: a gradation look-up means (6.1) for determining the conditions of gradation processing of the standard histogram in accordance with the diagnosis area of the object; and an emphasis coefficient means (6.2) for spatial filtering.

9. A method for determining conditions for reading an image exposed on a phosphor plate (3.1) by X-rays passing through an object (3.0), comprising the steps of: storing standard histograms of the X-ray image, each histogram incorporating data relating the X-ray intensity to the corresponding frequency;

selecting one of the standard histograms in accordance with the image-recording conditions; displaying the selected standard histogram; determining a desired range of X-ray intensities depending on the object to be examined; and determining actual read conditions for the X-ray image based on this range of X-ray intensities.

## Patentansprüche

1. Digitale Röntgenbildverarbeitungsvorrichtung zur Verwendung beim Scannen einer photostimulierbaren Phosphorplatte (3.1), die mit durch ein Objekt (3.0) gesendeten Röntgenstrahlen belichtet wird, mittels eines Anregungsstrahls, um ein Röntgenbild zu erhalten, und beim Lesen des Röntgenbildes mittels einer Leseeinheit (3) zum Durchführen eines Auslesens der belichteten Phosphorplatte (3.1), wobei die digitale Röntgenbildverarbeitungsvorrichtung eine Bildspeichereinrichtung (3.12) zum Speichern des Bildes enthält, das durch ein tatsächliches Lesen beim Diagnostizieren des Objekts erzeugt wird, und dadurch gekennzeichnet, daß diese ferner enthält:

eine Einrichtung zum Speichern eines Histogramms in bezug auf das Röntgenbild, das die Beziehung zwischen der Röntgenstrahlintensität und der entsprechenden Frequenz für vorherbestimmte Bildaufzeichnungsbedingungen repräsentiert;

eine Monitoreinrichtung (1.6.) zum Anzeigen des Histogramms;

eine Eingabeeinrichtung (2.6), durch die ein geeigneter Bereich von Röntgenstrahlintensitäten des Histogramms in Abhängigkeit vom zu untersuchenden Objekt gewählt werden kann; und

eine Einrichtung (2.3) zum Einstellen der tatsächlichen Lesebedingungen des Röntgenbildes auf Basis des gewählten Bereichs der Intensität der Röntgenstrahlen im Histogramm.

**2.** Digitale Röntgenbildverarbeitungsvorrichtung nach Anspruch 1,

bei welcher die genannte Histogramm-Speichereinrichtung (2.1) eingerichtet ist, um verschiedene Standard-Histogramme in bezug auf das Röntgenbild zu speichern, wobei jedes Standard-Histogramm die Beziehung zwischen der Röntgenstrahlintensität und der entsprechenden Frequenz für verschiedene Bildaufzeichnungsbedingungen repräsentiert;

und welche ferner eine Steuereinheit (2) zum Auswählen eines der Standard-Histogramme in Übereinstimmung mit den Bildaufzeichnungsbedingungen zum Speichern und Anzeigen wie oben erwähnt enthält.

**3.** Digitale Röntgenbildverarbeitungsvorrichtung nach Anspruch 1 oder 2, welche ferner umfaßt: eine Schalteinheit (SW) zum Umschalten zwischen einem Vorscan-Betrieb und dem tatsächlichen Lesebetrieb; und eine Histogramm-Berechnungseinheit (5.1), die betreibbar ist, wenn der Schalter auf den Vorscan-Betrieb eingestellt ist, um ein Vorscan-Histogramm auf Basis der beim Vorscan-Betrieb vor dem tatsächlichen Lesen erhaltenen Daten zu berechnen, zur Verwendung beim Auswählen des genannten Intensitätsbereichs.

**4.** Digitale Röntgenbildverarbeitungsvorrichtung nach Anspruch 3, und mit einer Einrichtung zum Eingeben des Vorscan-Histogramms in die genannte Monitoreinrichtung (1.6), um wie oben erwähnt angezeigt zu werden.

**5.** Digitale Röntgenbildverarbeitungsvorrichtung nach Anspruch 3, wenn auf Anspruch 2 rückbezogen, welche ferner eine zweite Monitoreinrichtung (1.7) zum Anzeigen des Vorscan-Histogramms umfaßt, wobei die Einrichtung (2.3) zum Einstellen der tatsächlichen Lesebedingungen betreibbar ist, um den Bereich der Röntgenstrahlintensität auf Basis des Vorscan-Histogramms und des Standard-Histogramms einzustellen.

**6.** Digitale Röntgenbildverarbeitungsvorrichtung nach Anspruch 3, wenn auf Anspruch 2 rückbezogen, welche ferner umfaßt: eine Korrelationsanalyseeinheit (2.2), die operativ mit der Histogramm-Speichereinrichtung (2.1) und der Berechnungseinheit (5.1) zum Empfangen des Vorscan- und des Standard-Histogramms verbunden ist, und zum Berechnen eines Korrelationswertes zum Verschieben des Standard-Histogramms in der Röntgenstrahlintensitätsrichtung, um einen maximalen Korrelationswert zwischen diesen Histogrammen zu erhalten; und eine Histogramm-Korrelationseinheit(2.4), die mit der Korrelationsanalyseeinheit (2.2) verbunden ist, zum Berechnen der Differenz zwischen dem verschobenen Standard-Histogramm und dem Vorscan-Histogramm, und zum Verwenden der berechneten Differenz, um den Intensitätsbereich der für das tatsächliche Lesen verwendeten Röntgenstrahlen zu korrigieren.

**7.** Digitale Röntgenbildverarbeitungsvorrichtung nach Anspruch 2, welche ferner eine Histogramm-Korrektureinheit (2.5) zum Korrigieren des Standard-Histogramms auf Basis des tatsächlichen Lese-Histogramms und zum Speichern des korrigierten Standard-Histogramms in der Histogramm-Speichereinheit (2.1) umfaßt.

**8.** Digitale Röntgenbildverarbeitungsvorrichtung nach Anspruch 2, welche ferner umfaßt: eine Gradationsnachschlageeinrichtung (6.1) zum Bestimmen der Bedingungen einer Gradationsverarbeitung des Standard-Histogramms in Übereinstimmung mit dem Diagnosebereich des Objekts; und eine Anhebungskoeffizienteneinrichtung (6.2) zum räumlichen Filtern.

**9.** Verfahren zum Bestimmen von Bedingungen zum Lesen eines auf einer Phosphorplatte (3.1) mit durch ein Objekt (3.0) gehenden Röntgenstrahlen belichteten Bildes, welches die Schritte umfaßt: Speichern von Standard-Histogrammen des Röntgenbildes, wobei jedes Histogramm Daten enthält, die die Röntgenstrahlintensität mit der entsprechenden Frequenz in Beziehung bringen; Auswählen eines der Standard-Histogramme in Übereinstimmung mit den Bildaufzeichnungsbedingungen; Anzeigen des ausgewählten Standard-Histogramms; Bestimmen eines gewünschten Bereichs von Röntgenstrahlintensitäten in Abhängigkeit vom zu untersuchenden Objekt; und Bestimmen der tatsächlichen Lesebedingungen für das Röntgenbild auf Basis dieses Bereichs von Röntgenstrahlintensitäten.

## Revendications

**1.** Appareil de traitement numérique d'images rayons X destiné à une utilisation lors d'un balayage d'une plaque de phosphore photostimulable (3.1) exposée à des rayons X transmis au travers d'un objet (3.0) au moyen d'un faisceau d'excitation afin d'obtenir une image rayons X et lors de la lecture de l'image rayons X au moyen d'une unité de lecture (3) afin de réaliser une lecture de la plaque de phosphore exposée (3.1), l'appareil de traitement numérique d'images rayons X incluant un moyen de stockage d'images (3.12) pour stocker l'image produite au moyen d'une lecture réelle lors du diagnostic de l'objet et caractérisé en ce qu'il comprend en outre:

un moyen pour stocker un histogramme concernant l'image rayons X, lequel représente la relation qui lie l'intensité des rayons X et la fréquence correspondante pour des conditions d'enregistrement d'image prédéterminées ;

un moyen de moniteur (1.6) pour afficher l'histogramme ;

un moyen d'entrée (2.6) au moyen duquel une plage appropriée d'intensités de rayons X de l'histogramme peut être choisie en fonction de l'objet qui doit être examiné ; et

un moyen (2.3) pour établir les conditions de lecture réelle de l'image rayons X sur la base de la plage choisie d'intensités de rayons X dans l'histogramme.

**2.** Appareil de traitement numérique d'images rayons X selon la revendication 1, dans lequel ledit moyen de stockage d'histogrammes (2.1) est conçu pour stocker divers histogrammes standard concernant l'image rayons X, chaque histogramme standard représentant la relation qui lie l'intensité des rayons X et la fréquence correspondante pour diverses conditions d'enregistrement d'image ; et

il inclut en outre une unité de commande (2) pour sélectionner l'un des histogrammes standard en relation avec les conditions d'enregistrement d'image en vue d'un stockage et d'un affichage comme mentionné ci-avant.

**3.** Appareil de traitement numérique d'images rayons X selon la revendication 1 ou 2, comprenant en outre : une unité de commutation (SW) pour réaliser une commutation entre une opération de pré-balayage et l'opération de lecture réelle ; et une unité de calcul d'histogramme (5.1) pouvant être actionnée lorsque le commutateur est établi pour l'opération de pré-balayage afin de calculer un histogramme de pré-balayage sur la base de données obtenues lors de l'opération de pré-balayage qui précède la lecture réelle, en vue d'une utilisation lors de la sélection de ladite plage d'intensités.

**4.** Appareil de traitement numérique d'images rayons X selon la revendication 3, incluant un moyen pour entrer l'histogramme de pré-balayage sur ledit moyen de moniteur (1.6) en vue de son affichage comme mentionné ci-avant.

**5.** Appareil de traitement numérique d'images rayons X selon la revendication 3 lorsqu'elle dépend de la revendication 2, comprenant en outre un second moyen de moniteur (1.7) pour afficher l'histogramme de pré-balayage, le moyen (2.3) pour établir les conditions de lecture réelle pouvant être actionné pour établir la plage d'intensités de rayons X sur la base de l'histogramme de pré-balayage et de l'histogramme standard.

**6.** Appareil de traitement numérique d'images rayons X selon la revendication 3 lorsqu'elle dépend de la revendication 2, comprenant en outre : une unité d'analyse de corrélation (2.2) connectée de façon opérationnelle au moyen de stockage d'histogrammes (2.1) et à l'unité de calcul (5.1) pour recevoir les histogrammes de pré-balayage standard et pour calculer une valeur de corrélation afin de décaler l'histogramme standard suivant la direction d'intensité des rayons X de manière à obtenir une valeur de corrélation maximum entre ces histogrammes et une unité de corrélation d'histogramme (2.4) connectée à l'unité d'analyse de corrélation (2.2) pour calculer la différence entre l'histogramme standard décalé et l'histogramme de pré-balayage et pour utiliser la différence calculée pour corriger la plage d'intensités de rayons X utilisée pour la lecture réelle.

**7.** Appareil de traitement numérique d'images rayons X selon la revendication 2, comprenant en outre : une unité de correction d'histogramme (2.5) pour corriger l'histogramme standard sur la base de l'histogramme de lecture réelle et pour stocker l'histogramme standard corrigé dans l'unité de stockage d'histogrammes (2.1).

**8.** Appareil de traitement numérique d'images rayons X selon la revendication 2, comprenant en outre : un moyen de consultation de gradation (6.1) pour déterminer les conditions d'un traitement de gradation de l'histogramme standard en relation avec la zone de diagnostic de l'objet ; et un moyen de coefficient d'accentuation (6.2) destiné à un filtrage spatial.

**9.** Procédé de détermination de conditions pour lire une image exposée sur une plaque de phosphore (3.1) au moyen de rayons X traversant un objet (3.0), comprenant les étapes de : stockage d'histogrammes standard de l'image rayons X, chaque histogramme incorporant des données concernant l'intensité des rayons X par rapport à la fréquence correspondante ; sélection des histogrammes standard en relation avec les conditions d'enregistrement d'image ; affichage de l'histogramme standard sélectionné ; détermination d'une plage souhaitée des intensités des rayons X en fonction de l'objet qui doit être examiné ; et détermination de conditions de lecture réelle pour l'image rayons X sur la base de cette plage d'intensités des rayons X.

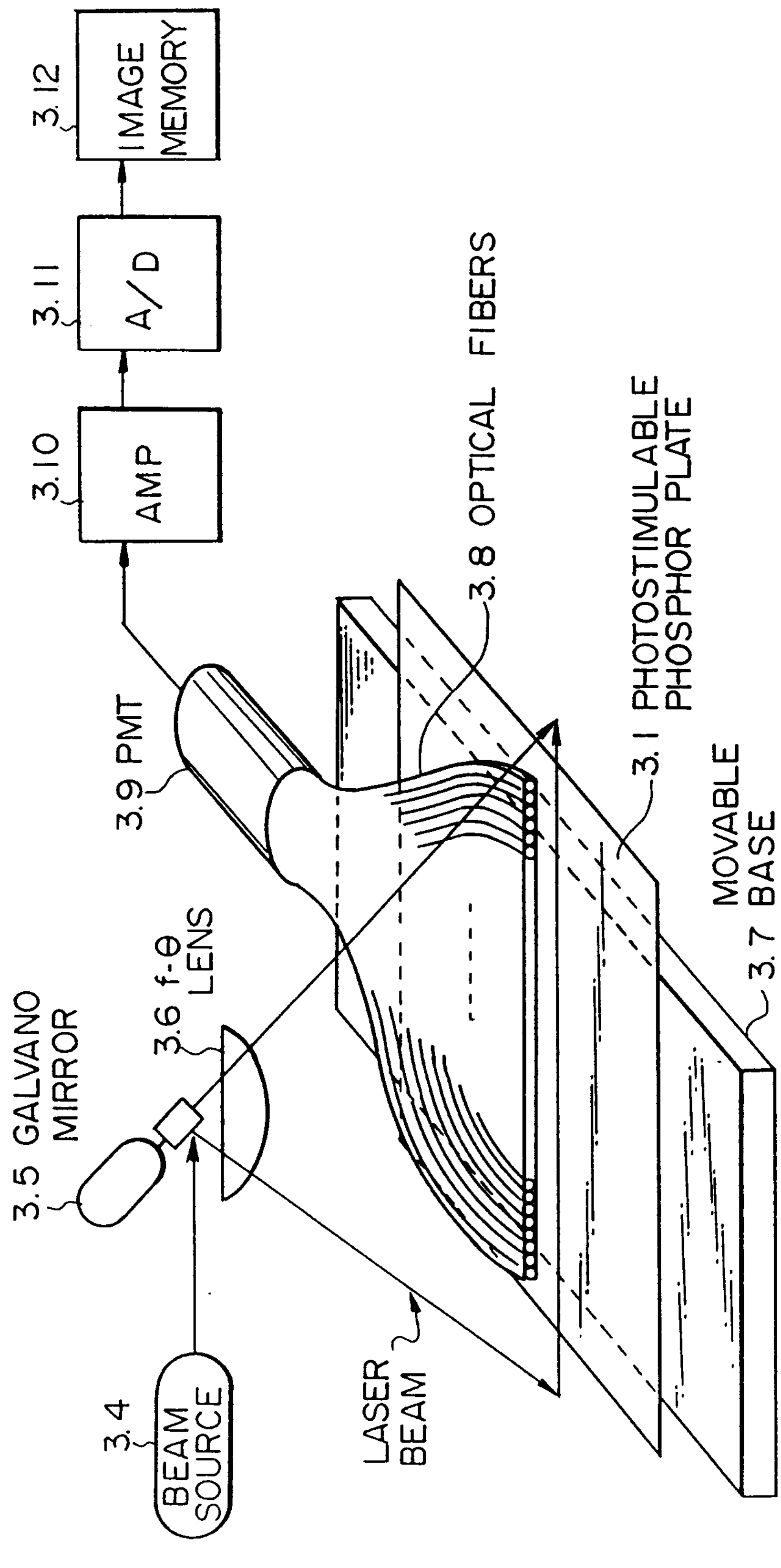
3.4 BEAM SOURCE
3.5 GALVANO MIRROR
3.6 f-θ LENS
LASER BEAM
3.9 PMT
3.8 OPTICAL FIBERS
3.1 PHOTOSTIMULABLE PHOSPHOR PLATE
3.7 MOVABLE BASE
3.10 AMP
3.11 A/D
3.12 IMAGE MEMORY

Fig. 1

Fig. 2

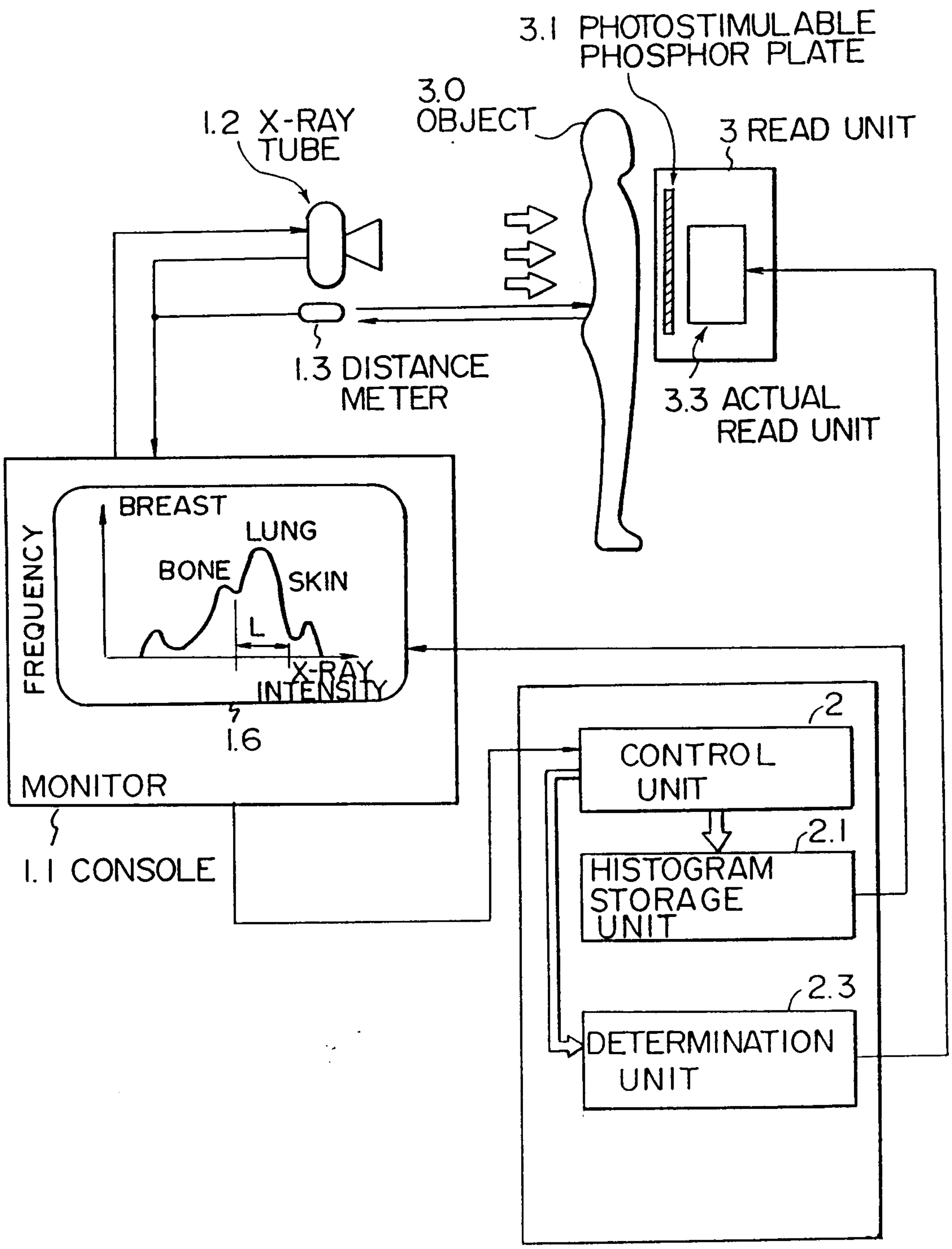
3.1 PHOTOSTIMULABLE PHOSPHOR PLATE
3.0 OBJECT
1.2 X-RAY TUBE
3 READ UNIT
1.3 DISTANCE METER
3.3 ACTUAL READ UNIT
BREAST
LUNG
BONE
SKIN
FREQUENCY
L
X-RAY INTENSITY
1.6
MONITOR
1.1 CONSOLE
2
CONTROL UNIT
2.1
HISTOGRAM STORAGE UNIT
2.3
DETERMINATION UNIT

Fig. 3

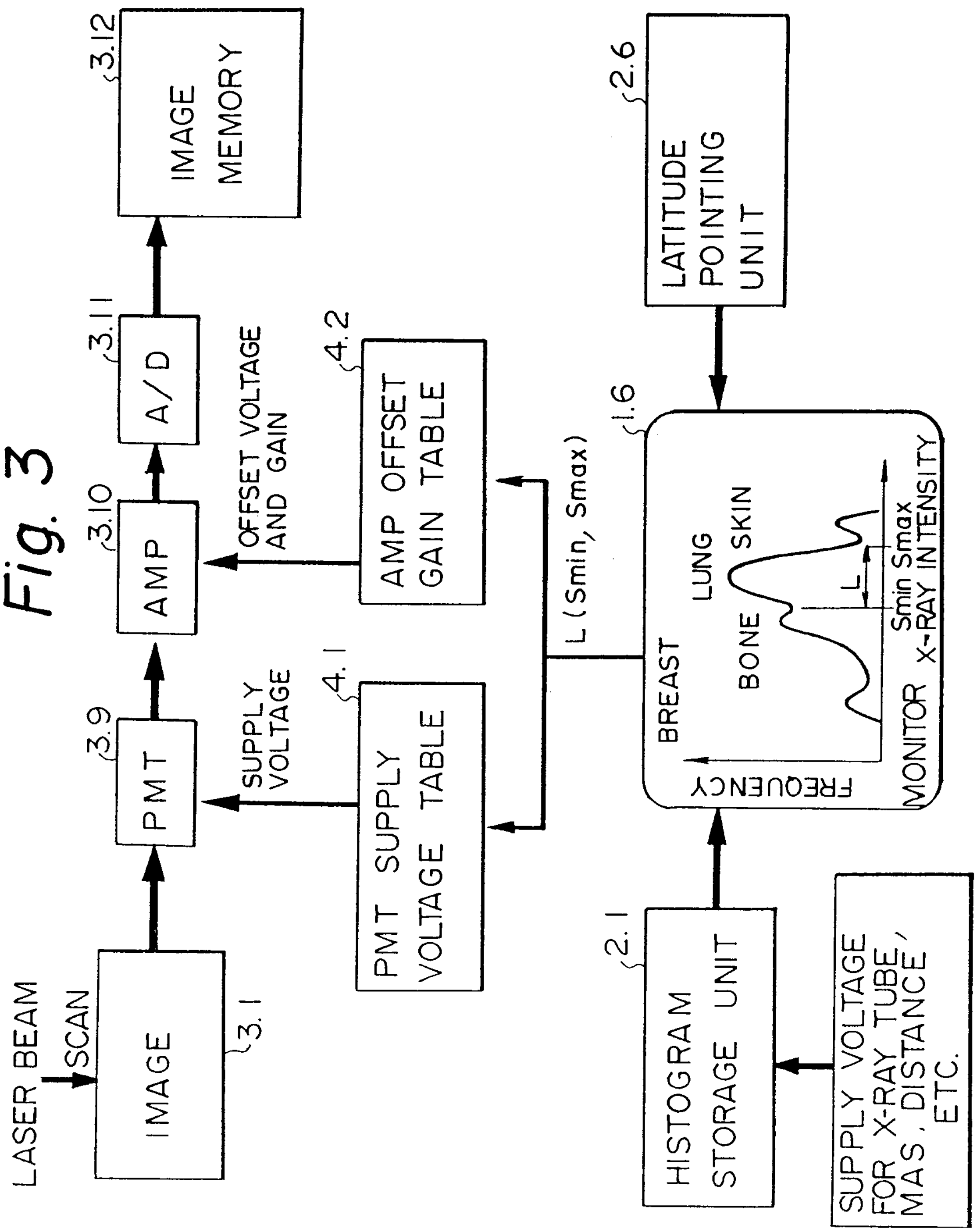
LASER BEAM SCAN
IMAGE
3.1
PMT
3.9
AMP
3.10
A/D
3.11
IMAGE MEMORY
3.12
SUPPLY VOLTAGE
OFFSET VOLTAGE AND GAIN
PMT SUPPLY VOLTAGE TABLE
4.1
AMP OFFSET GAIN TABLE
4.2
L (Smin, Smax)
1.6
BREAST
BONE
LUNG
SKIN
L
Smin Smax
X-RAY INTENSITY
FREQUENCY
MONITOR
LATITUDE POINTING UNIT
2.6
HISTOGRAM STORAGE UNIT
2.1
SUPPLY VOLTAGE FOR X-RAY TUBE, MAS, DISTANCE, ETC.

*Fig. 4*

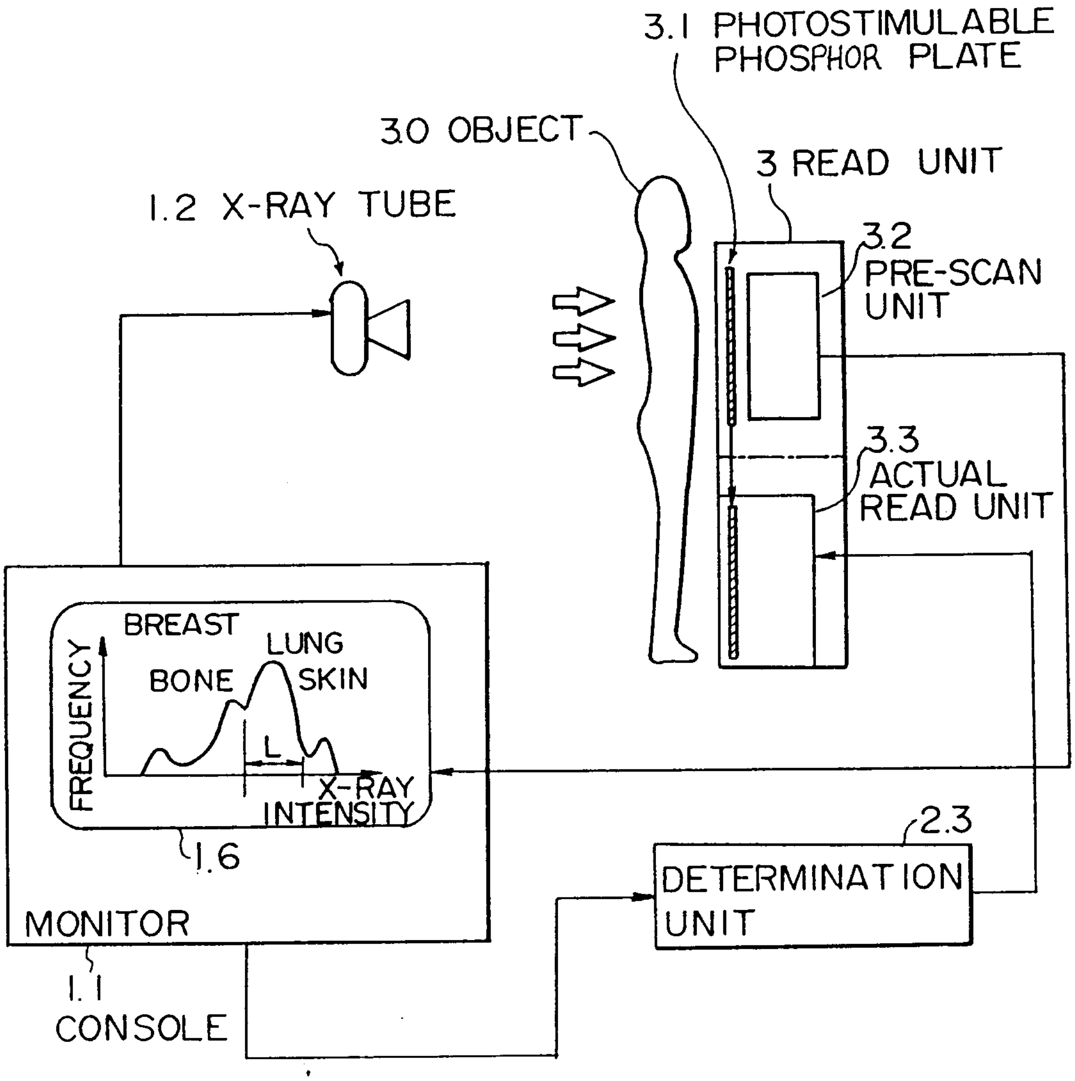
3.1 PHOTOSTIMULABLE PHOSPHOR PLATE
3.0 OBJECT
3 READ UNIT
1.2 X-RAY TUBE
3.2 PRE-SCAN UNIT
3.3 ACTUAL READ UNIT
BREAST
LUNG
BONE
SKIN
FREQUENCY
L
X-RAY INTENSITY
1.6
2.3
DETERMINATION UNIT
MONITOR
1.1
CONSOLE

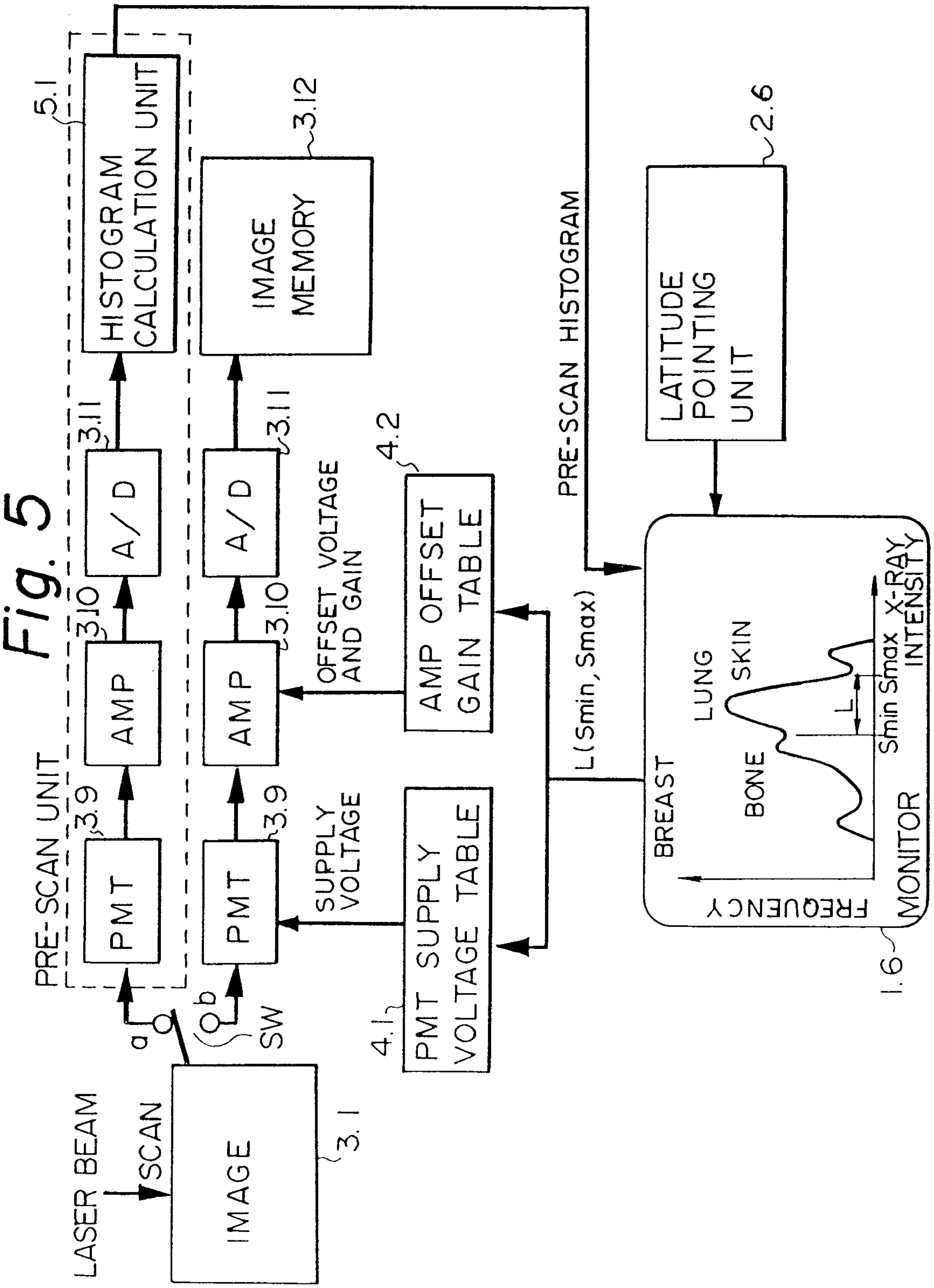
LASER BEAM
SCAN
IMAGE
3.1
a
b
SW
PRE-SCAN UNIT
PMT
3.9
AMP
3.10
A / D
3.11
HISTOGRAM CALCULATION UNIT
5.1
IMAGE MEMORY
3.12
SUPPLY VOLTAGE
OFFSET VOLTAGE AND GAIN
PMT SUPPLY VOLTAGE TABLE
4.1
AMP OFFSET GAIN TABLE
4.2
L (Smin, Smax)
PRE-SCAN HISTOGRAM
LATITUDE POINTING UNIT
2.6
BREAST
BONE
LUNG
SKIN
L
Smin
Smax
X-RAY INTENSITY
FREQUENCY
MONITOR
1.6

Fig. 5

*Fig. 6*

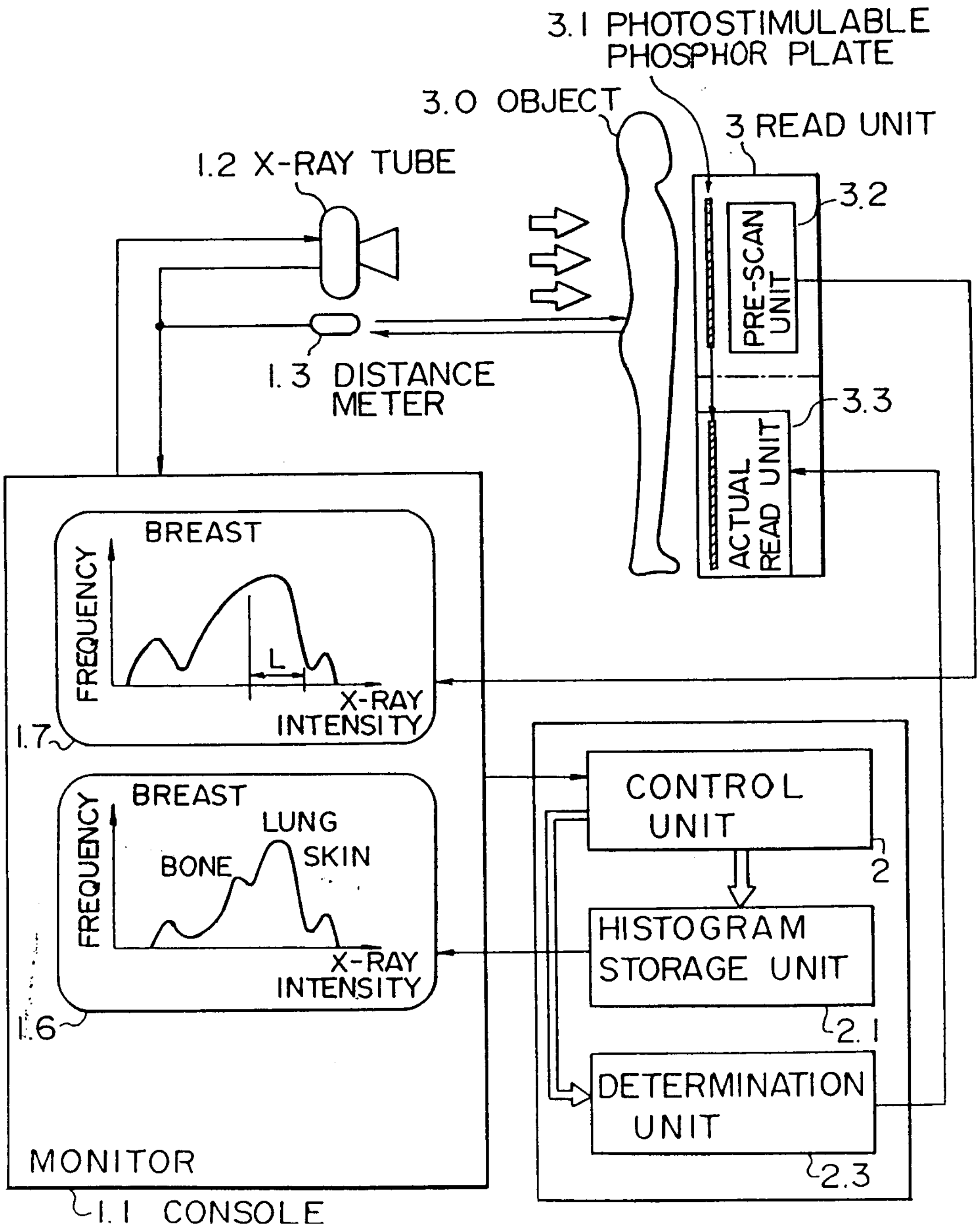
3.1 PHOTOSTIMULABLE PHOSPHOR PLATE
3.0 OBJECT
3 READ UNIT
1.2 X-RAY TUBE
3.2
PRE-SCAN UNIT
1.3 DISTANCE METER
3.3
ACTUAL READ UNIT
BREAST
FREQUENCY
L
X-RAY INTENSITY
1.7
BREAST
LUNG
BONE
SKIN
FREQUENCY
X-RAY INTENSITY
1.6
CONTROL UNIT
2
HISTOGRAM STORAGE UNIT
2.1
DETERMINATION UNIT
2.3
MONITOR
1.1 CONSOLE

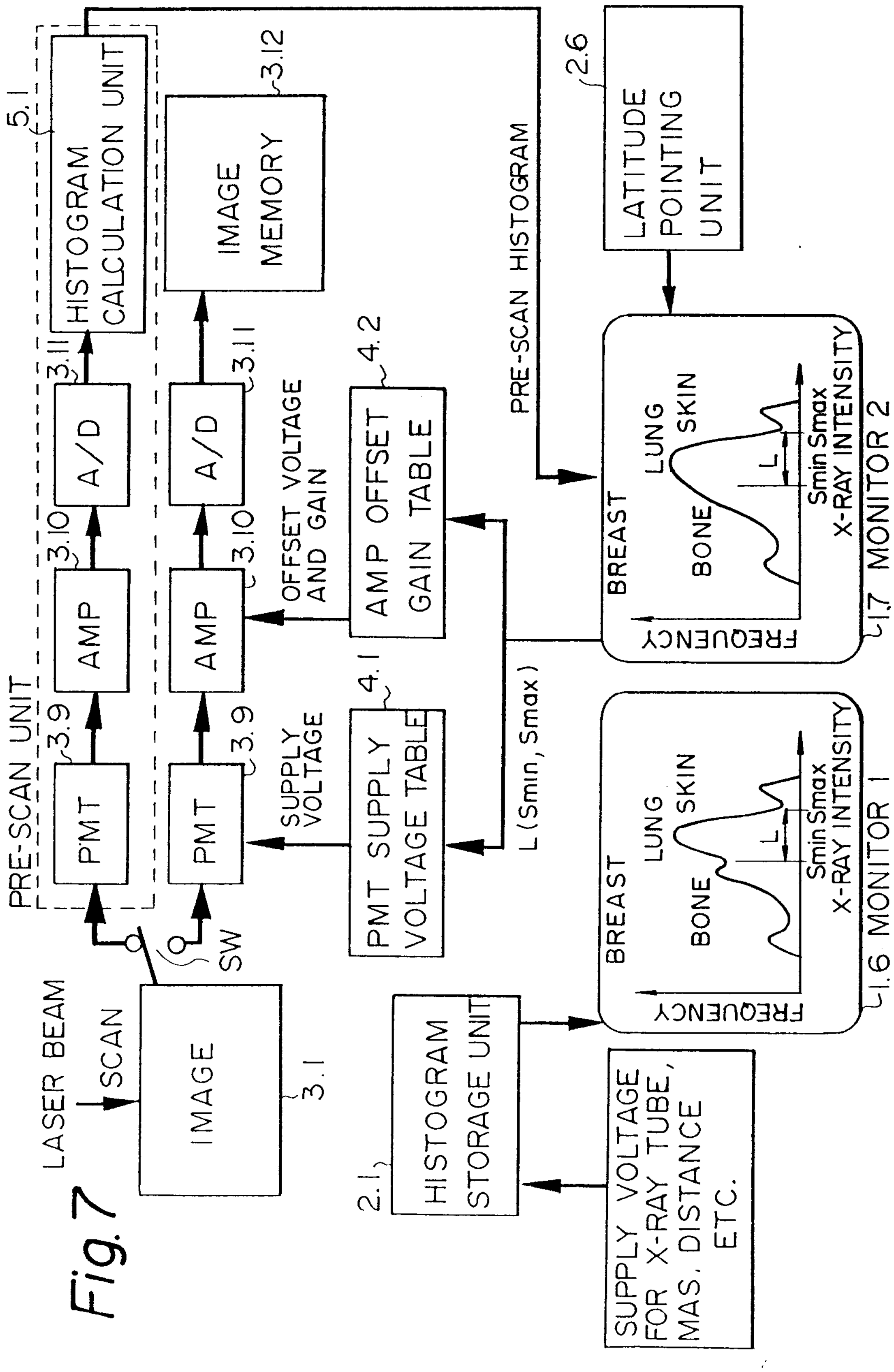
LASER BEAM
SCAN
IMAGE
3.1
SW
PRE-SCAN UNIT
PMT
3.9
AMP
3.10
A/D
3.11
HISTOGRAM CALCULATION UNIT
5.1
PMT
3.9
AMP
3.10
A/D
3.11
IMAGE MEMORY
3.12
SUPPLY VOLTAGE
OFFSET VOLTAGE AND GAIN
PMT SUPPLY VOLTAGE TABLE
4.1
AMP OFFSET GAIN TABLE
4.2
L (Smin, Smax)
PRE-SCAN HISTOGRAM
LATITUDE POINTING UNIT
2.6
HISTOGRAM STORAGE UNIT
2.1
SUPPLY VOLTAGE FOR X-RAY TUBE, MAS, DISTANCE ETC.
BREAST
BONE
LUNG
SKIN
L
Smin Smax
X-RAY INTENSITY
FREQUENCY
1.6 MONITOR 1
BREAST
BONE
LUNG
SKIN
L
Smin Smax
X-RAY INTENSITY
FREQUENCY
1.7 MONITOR 2
Fig. 7

*Fig. 8*

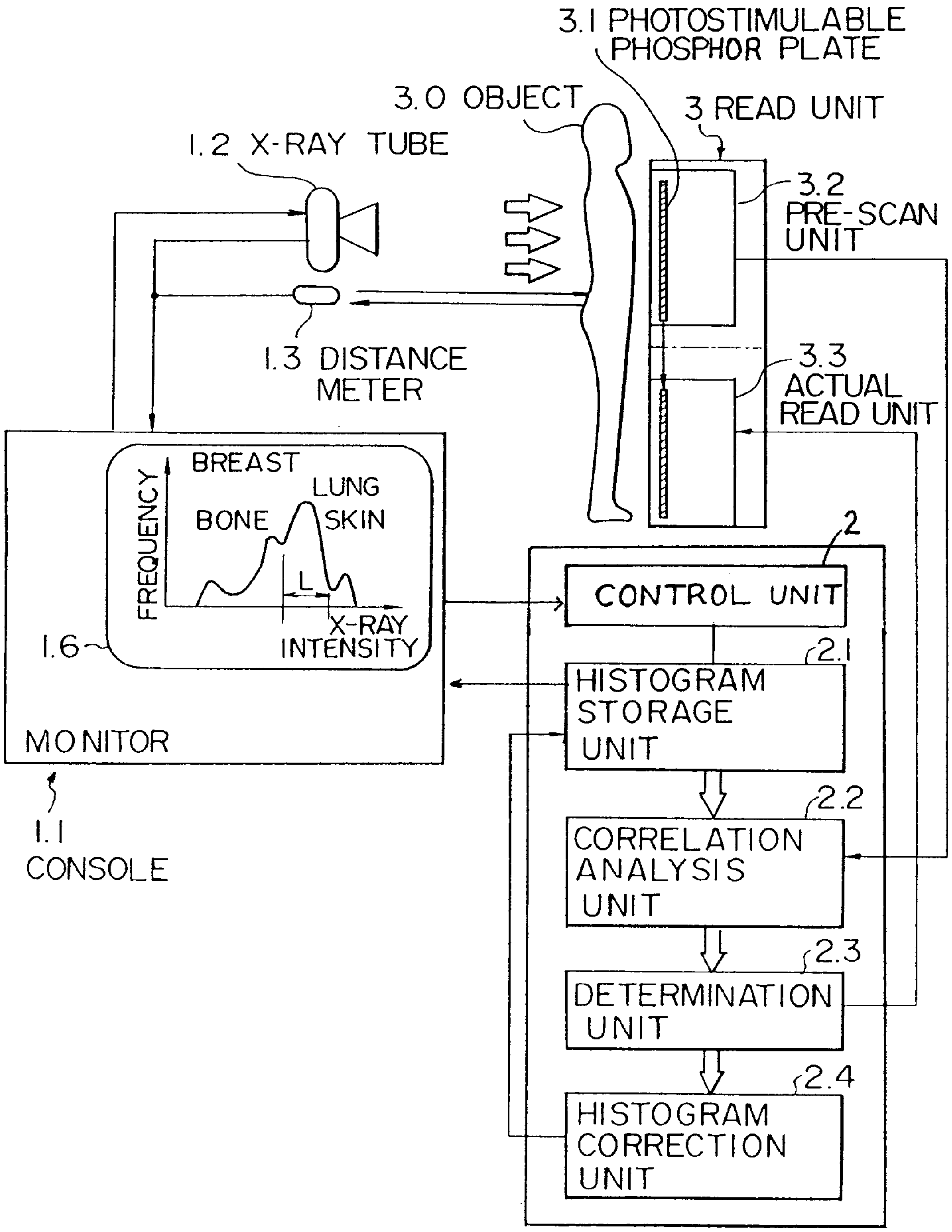
3.1 PHOTOSTIMULABLE PHOSPHOR PLATE
3.0 OBJECT
3 READ UNIT
1.2 X-RAY TUBE
3.2 PRE-SCAN UNIT
1.3 DISTANCE METER
3.3 ACTUAL READ UNIT
FREQUENCY
BREAST
LUNG
BONE
SKIN
L
X-RAY INTENSITY
1.6
MONITOR
1.1 CONSOLE
2
CONTROL UNIT
2.1
HISTOGRAM STORAGE UNIT
2.2
CORRELATION ANALYSIS UNIT
2.3
DETERMINATION UNIT
2.4
HISTOGRAM CORRECTION UNIT

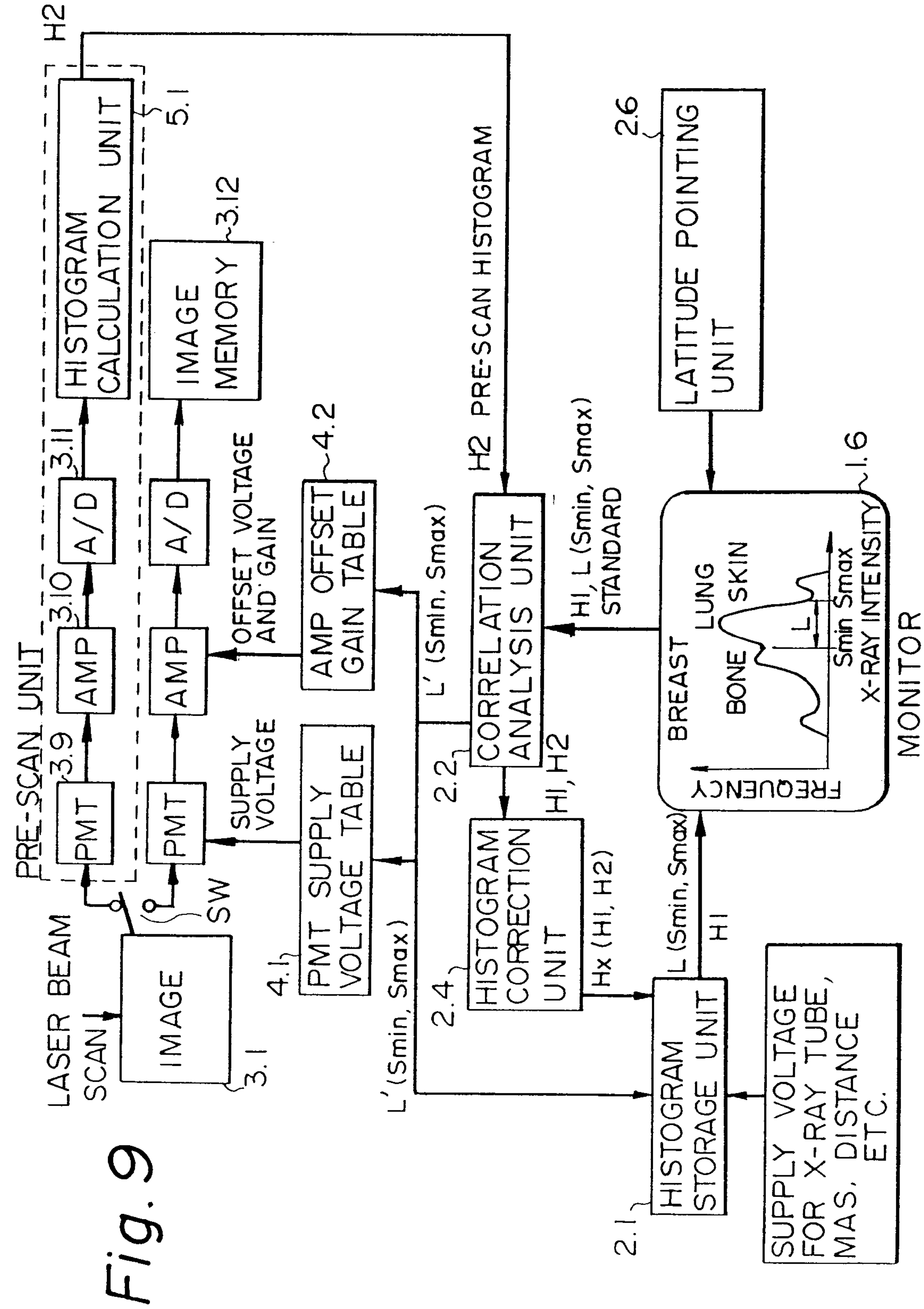
PRE-SCAN UNIT
LASER BEAM SCAN
IMAGE
3.1
SW
PMT
3.9
AMP
3.10
A/D
3.11
HISTOGRAM CALCULATION UNIT
5.1
H2
PMT
AMP
A/D
IMAGE MEMORY
3.12
SUPPLY VOLTAGE
OFFSET VOLTAGE AND GAIN
PMT SUPPLY VOLTAGE TABLE
4.1
AMP OFFSET GAIN TABLE
4.2
L' (Smin, Smax)
L' (Smin, Smax)
H2 PRE-SCAN HISTOGRAM
CORRELATION ANALYSIS UNIT
2.2
HI, H2
HISTOGRAM CORRECTION UNIT
2.4
Hx (HI, H2)
HI, L (Smin, Smax) STANDARD
HISTOGRAM STORAGE UNIT
2.1
L (Smin, Smax)
HI
SUPPLY VOLTAGE FOR X-RAY TUBE, MAS, DISTANCE ETC.
LATITUDE POINTING UNIT
2.6
BREAST
BONE
LUNG
SKIN
L
Smin Smax
FREQUENCY
X-RAY INTENSITY
1.6
MONITOR

Fig. 9

Fig. 10

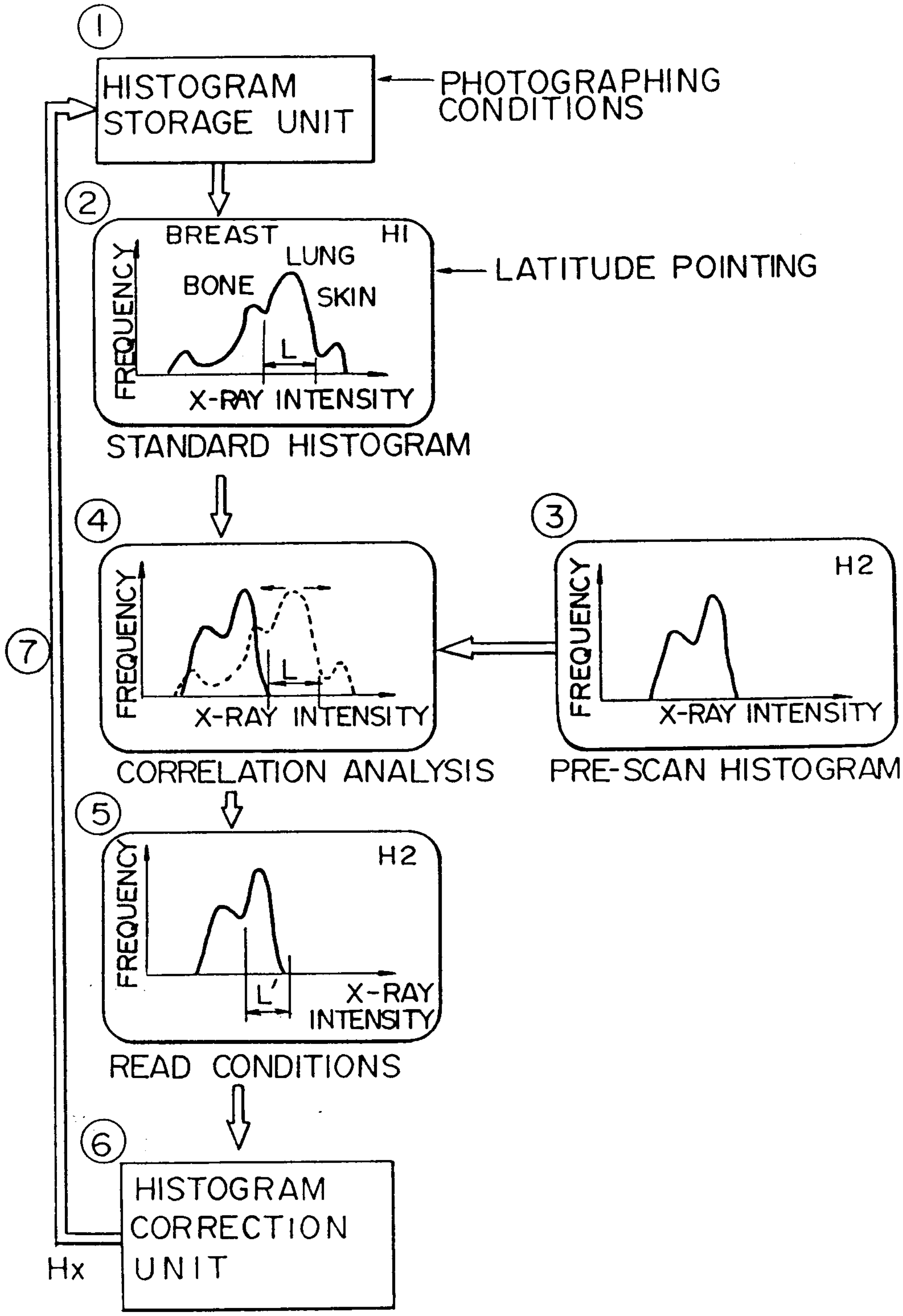
1
HISTOGRAM STORAGE UNIT
PHOTOGRAPHING CONDITIONS
2
BREAST
H1
LUNG
BONE
SKIN
FREQUENCY
L
X-RAY INTENSITY
LATITUDE POINTING
STANDARD HISTOGRAM
4
FREQUENCY
L
X-RAY INTENSITY
CORRELATION ANALYSIS
3
H2
FREQUENCY
X-RAY INTENSITY
PRE-SCAN HISTOGRAM
7
5
H2
FREQUENCY
L'
X-RAY INTENSITY
READ CONDITIONS
6
HISTOGRAM CORRECTION UNIT
Hx

*Fig. 11*

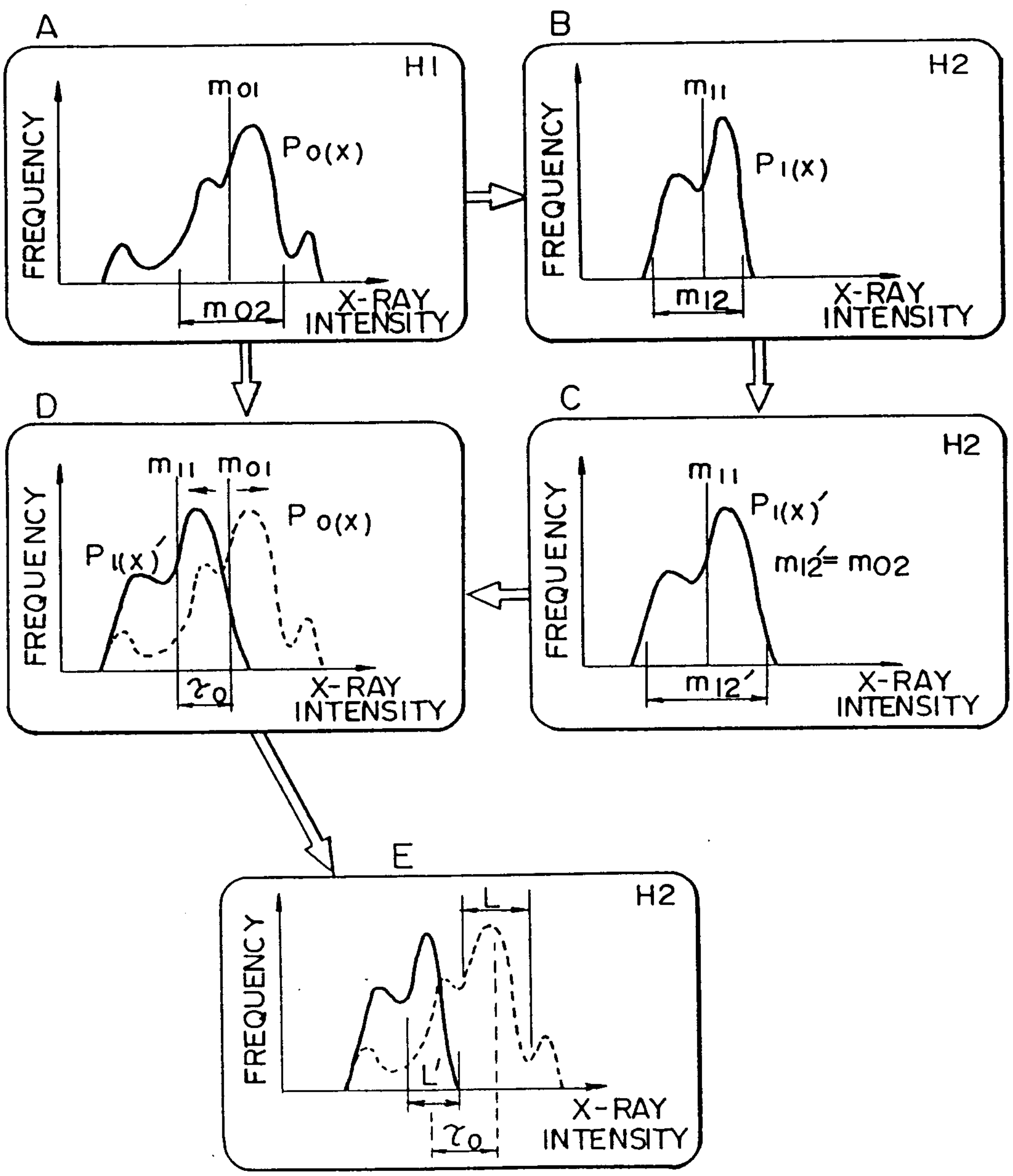
A
H1
FREQUENCY
m01
P0(x)
m02
X-RAY INTENSITY
B
H2
FREQUENCY
m11
P1(x)
m12
X-RAY INTENSITY
C
H2
FREQUENCY
m11
P1(x)'
m12'= m02
m12'
X-RAY INTENSITY
D
FREQUENCY
m11 m01
P1(x)'
P0(x)
τ0
X-RAY INTENSITY
E
H2
FREQUENCY
L
L'
τ0
X-RAY INTENSITY

Fig. 12

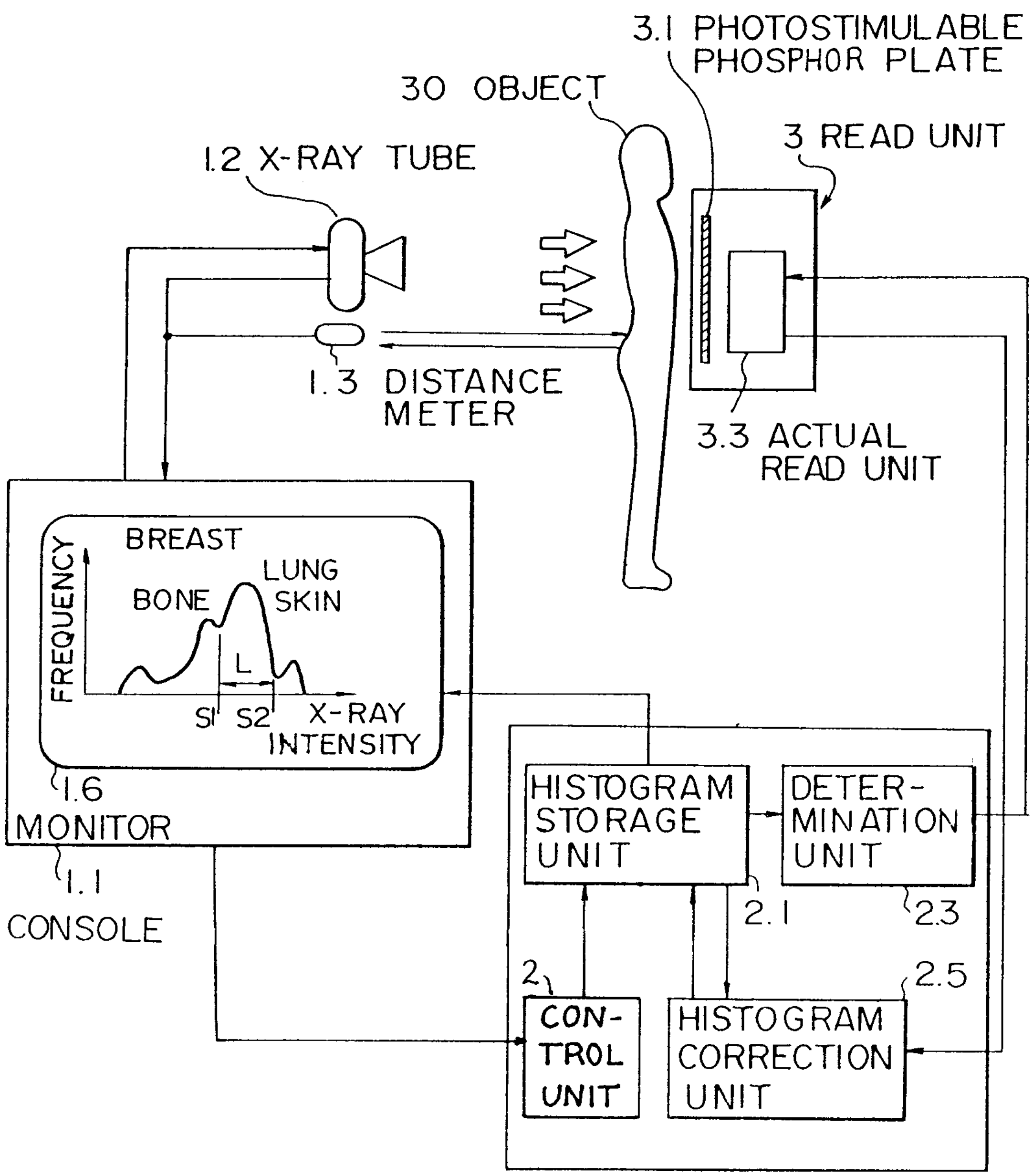
3.1 PHOTOSTIMULABLE PHOSPHOR PLATE
30 OBJECT
3 READ UNIT
1.2 X-RAY TUBE
1.3 DISTANCE METER
3.3 ACTUAL READ UNIT
BREAST
FREQUENCY
LUNG
BONE
SKIN
L
S1
S2
X-RAY INTENSITY
1.6
MONITOR
1.1
CONSOLE
HISTOGRAM STORAGE UNIT
DETER-MINATION UNIT
2.1
2.3
2
2.5
CON-TROL UNIT
HISTOGRAM CORRECTION UNIT

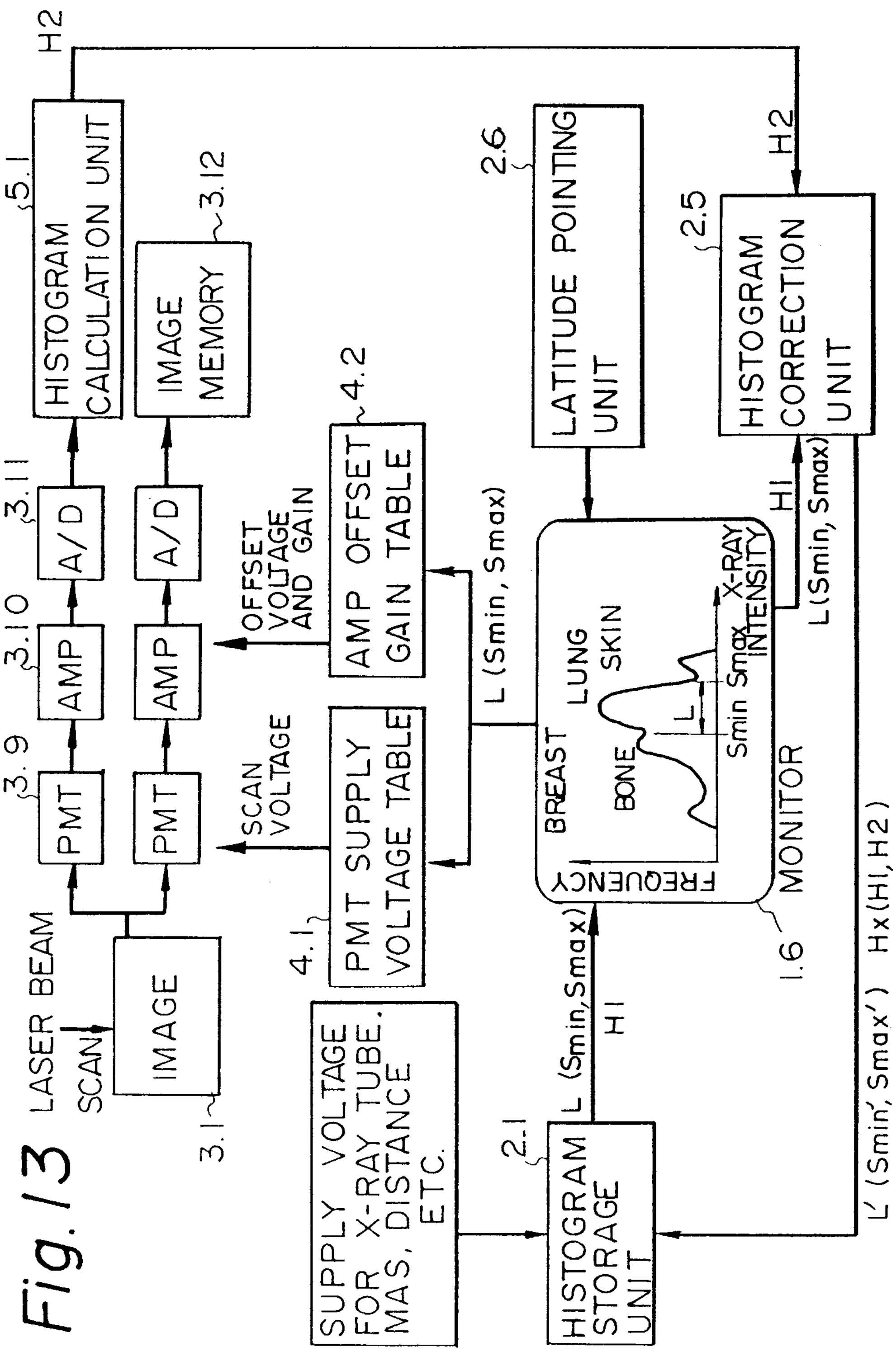
LASER BEAM
SCAN
IMAGE
3.1
PMT
3.9
AMP
3.10
A/D
3.11
HISTOGRAM CALCULATION UNIT
5.1
H2
IMAGE MEMORY
3.12
SCAN VOLTAGE
OFFSET VOLTAGE AND GAIN
PMT SUPPLY VOLTAGE TABLE
4.1
AMP OFFSET GAIN TABLE
4.2
L (Smin, Smax)
LATITUDE POINTING UNIT
2.6
HISTOGRAM CORRECTION UNIT
2.5
H2
FREQUENCY
BREAST
BONE
LUNG
SKIN
L
Smin Smax
X-RAY INTENSITY
MONITOR
1.6
H1
L(Smin, Smax)
SUPPLY VOLTAGE FOR X-RAY TUBE, MAS, DISTANCE ETC.
HISTOGRAM STORAGE UNIT
2.1
L (Smin,Smax)
H1
L′ (Smin′, Smax′)   Hx(H1, H2)

Fig. 13

Fig. 14

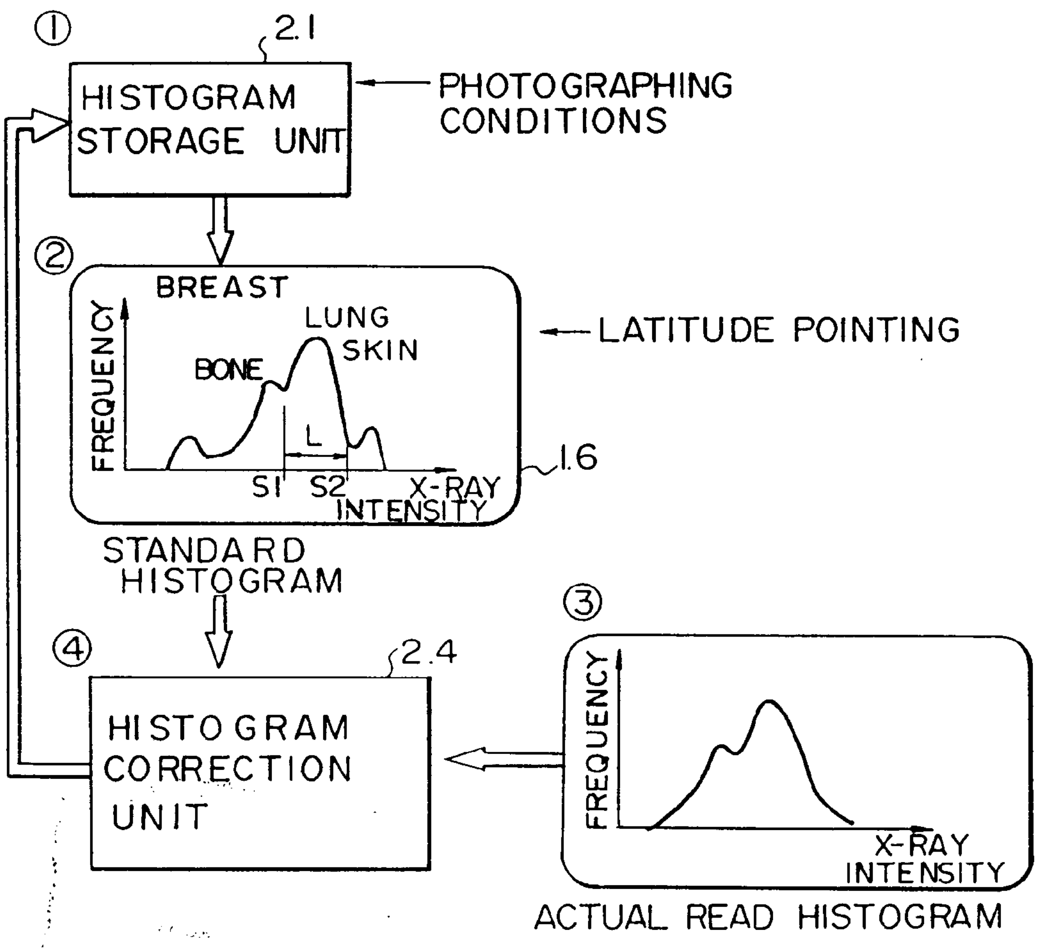
①
2.1
HISTOGRAM STORAGE UNIT
PHOTOGRAPHING CONDITIONS
②
BREAST
FREQUENCY
LUNG
SKIN
BONE
L
S1
S2
X-RAY INTENSITY
LATITUDE POINTING
1.6
STANDARD HISTOGRAM
③
④
2.4
HISTOGRAM CORRECTION UNIT
FREQUENCY
X-RAY INTENSITY
ACTUAL READ HISTOGRAM

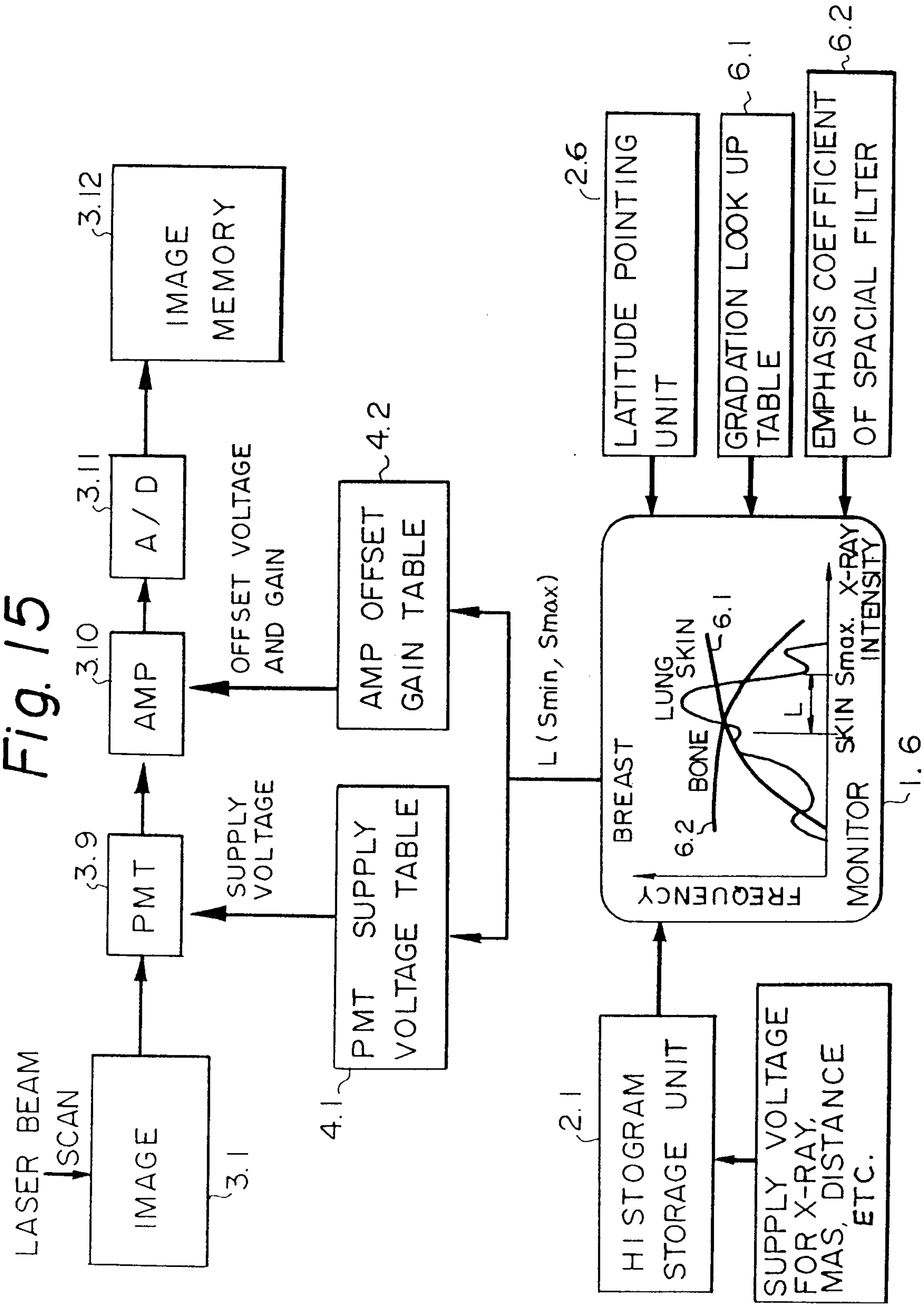
LASER BEAM SCAN
IMAGE
3.1
PMT
3.9
AMP
3.10
A / D
3.11
IMAGE MEMORY
3.12
SUPPLY VOLTAGE
OFFSET VOLTAGE AND GAIN
PMT SUPPLY VOLTAGE TABLE
4.1
AMP OFFSET GAIN TABLE
4.2
L (Smin, Smax)
LATITUDE POINTING UNIT
2.6
GRADATION LOOK UP TABLE
6.1
EMPHASIS COEFFICIENT OF SPACIAL FILTER
6.2
BREAST
BONE
LUNG
SKIN
6.1
6.2
L
SKIN Smin
Smax.
X-RAY INTENSITY
FREQUENCY
MONITOR
1.6
HISTOGRAM STORAGE UNIT
2.1
SUPPLY VOLTAGE FOR X-RAY, MAS, DISTANCE ETC.
Fig. 15

Fig. 16

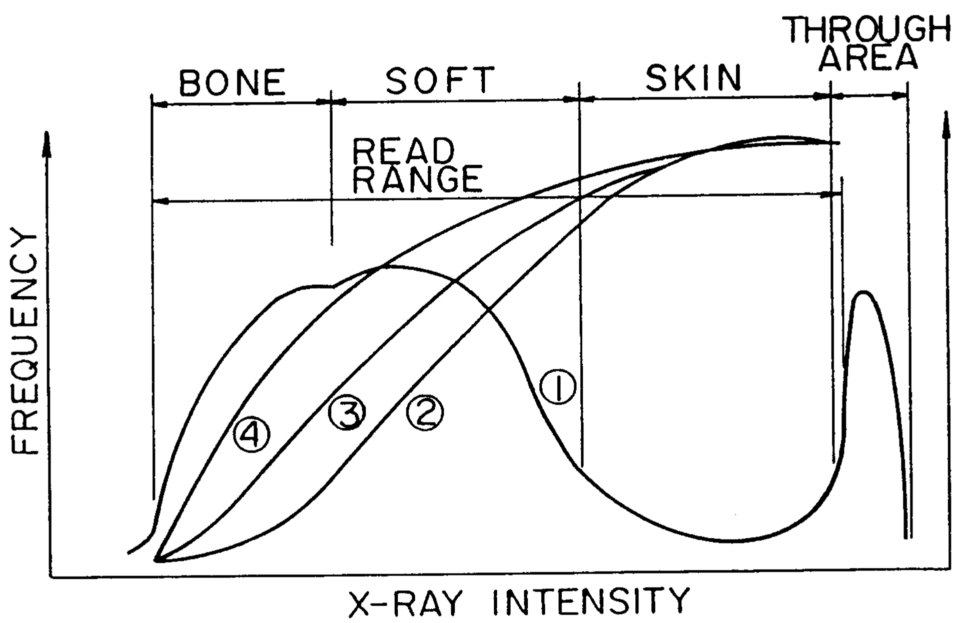
THROUGH AREA
BONE
SOFT
SKIN
READ RANGE
FREQUENCY
GRADATION
①
②
③
④
X-RAY INTENSITY

# Fig. 17

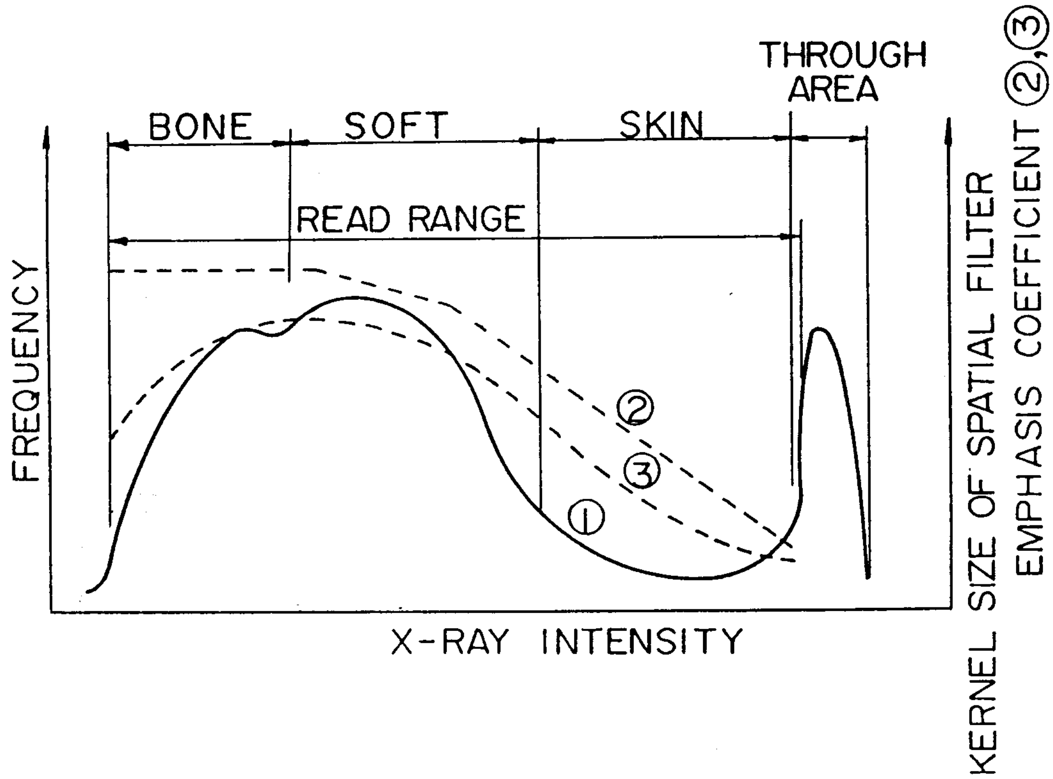
THROUGH AREA
BONE
SOFT
SKIN
READ RANGE
FREQUENCY
②
③
①
X-RAY INTENSITY
KERNEL SIZE OF SPATIAL FILTER
EMPHASIS COEFFICIENT ②,③